(19) **Europäisches Patentamt**
**European Patent Office**
**Office européen des brevets**

(11) **EP 2 665 305 B1**

(12) **EUROPEAN PATENT SPECIFICATION**

(45) Date of publication and mention
of the grant of the patent:
**23.03.2016 Bulletin 2016/12**

(51) Int Cl.:
*H04W 24/00* (2009.01)        *H04W 72/12* (2009.01)
*H04W 24/10* (2009.01)        *H04W 28/04* (2009.01)
*H04W 88/08* (2009.01)        *H04L 1/00* (2006.01)
*H04L 5/00* (2006.01)         *H04W 52/24* (2009.01)

(21) Application number: **12734211.1**

(22) Date of filing: **13.01.2012**

(86) International application number:
**PCT/CN2012/070341**

(87) International publication number:
**WO 2012/095023 (19.07.2012 Gazette 2012/29)**

(54) **INTERFERENCE DETECTION METHOD**

INTERFERENZERKENNUNGSVERFAHREN

PROCÉDÉ DE DÉTECTION DE BROUILLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2011 CN 201110006927**

(43) Date of publication of application:
**20.11.2013 Bulletin 2013/47**

(73) Proprietor: **Huawei Technologies Co., Ltd.
Longgang District
Shenzhen, Guangdong 518129 (CN)**

(72) Inventor: **YU, Yinghui
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2010/086734        WO-A2-2009/120478
CN-A- 101 459 956         CN-A- 101 778 463
CN-A- 101 931 957         US-A1- 2010 254 471**

## Description

## FIELD OF TECHNOLOGY

The present invention relates to the field of communication technology and, in particular, to an interference detection method, device, and system.

## BACKGROUND

In a conventional cellular communication system, site addresses of each base station are selected based on a network planning, so as to ensure the interference between different base stations is within a tolerable range. Along with the development of the communication technology, varieties of frequency spectra are used in the cellular communication system, thus making it possible to use different radio access technologies for the same frequency, or use the same or different access technologies for adjacent frequencies. A network layout of the cellular communication system in which various types of frequency spectra are used makes the interference coexistence between different base stations more complicated, therefore, a new solution for interference detection and interference coexistence is needed.

In addition, a flexible spectrum sharing technology has been proposed as an effective method for improving spectrum efficiency. Configuration of a cell adopting the flexible spectrum sharing technology may change semi-statically, the change will impact the already planned network to some extent and, thus, additional interference may occur.

Regarding a solution for interference measurement, a measurement for a base station, i.e., a downlink measurement, is performed by a user equipment (User Equipment, UE), and an uplink measurement is mainly performed for a UE by a base station.

The types of measurement include physical layer measurement and higher-layer measurement.

The physical layer measurement includes a downlink measurement and an uplink measurement, wherein the downlink measurement is a channel quality indicator (Channel Quality Indicator, CQI) measurement, and the uplink measurement is a sounding reference signal (Sounding Reference signal, SRS) measurement. Both the two types of measurement provide downlink and uplink channel quality serving as a reference in scheduling to a base station (E Node Base station, eNB). Because a schedule is supported, the reporting period of the measurement ranges from 2 ms to tens of ms and, thus, the measurement result is a dynamic measurement result with a short period.

The higher-layer measurement is a downlink measurement, and is configured to measure common reference symbols on a downlink subframe with a period of several hundreds of milliseconds and, thus, represents a long-term channel quality.

The measurement for a base station is a downlink measurement performed by a UE. Since measurement results of the downlink CQI measurement and the uplink SRS measurement change dynamically and quickly, a long-term and stable channel measurement result cannot be provided.

WO 2010/086734 A1 provides scheduling transmission of data at a base station based on an interference indicator message from another base station, wherein the interference indicator message is used for calculating an interference indicator message. By comparing the interference indicator message to a threshold, a determination is made, whether to transmit the data using a current resource or to delay transmission of the data.

## SUMMARY

A technical problem to be solved by embodiments of the present invention is to provide an interference detection method, device, and system, so as to provide long-term and stable channel measurement results.

A first aspect of the invention provides an interference detection method, including:

acquiring, by a measuring base station, a measurement reference signal of an interfering base station and configuration information of the measurement reference signal; and
detecting, by the measuring base station, a reception quality value of the measurement reference signal of the interfering base station according to the configuration information;
where, the detecting, by the measuring base station, the reception quality value of the measurement reference signal of the interfering base station according to the configuration information, includes:

determining, by the measuring base station, an interfered frequency band of the measuring base station;
detecting, by the measuring base station, the reception quality value of the measurement reference signal of the interfering base station on the interfered frequency band.

In an implementation of the first aspect, the measurement reference signal includes one of the following: a common reference symbol on a downlink subframe, a sounding reference signal on a downlink subframe, a common reference symbol on an uplink subframe, and a sounding reference signal on an uplink subframe.

In another implementation of the first aspect, the method further includes:

when the reception quality value of the measurement reference signal is higher than a set threshold, enabling, by the measuring base station, an interference processing procedure with the interfering base station, where the interference processing procedure includes:

sending, by the measuring base station, an interference processing request to the interfering base station according to the reception quality value of the reference signal; or
canceling, by the measuring base station, a data resource scheduling on an interfered subframe; or
performing, by the measuring base station, a data resource scheduling only on a user equipment (UE) with a reception quality value of the reference signal measured on an interfered subframe which is lower than the set threshold.

In another implementation of the first aspect, the interference processing request includes at least one of the following information:

transmission power information to be adjusted, time domain position indication information or frequency domain position indication information of a resource to be power controlled, and parameter indication information to be adjusted;
where the parameter indication information to be adjusted comprises at least one of the following information: a working central frequency of a cell under the interfering base station, a working frequency band of the cell under the interfering base station, changing information of downlink subframe offset of the cell under the interfering base station, changing information of uplink and downlink configuration of the cell under the interfering base station, and changing information of a tilt angle of an antenna of the cell under the interfering base station.

In another implementation of the first aspect, before the measuring base station performs the detection, the method further includes:

acquiring, by the measuring base station, scheduling performance of cells under the measuring base station itself, and performing the detection if the scheduling performance of the cells is degraded; or
detecting, by the measuring base station, a reception quality value of a reference signal of the measuring base station itself, and performing the detection if the reception quality value of the reference signal of the measuring base station is lower than the set threshold.

In another implementation of the first aspect, the determining, by the measuring base station, the interfered frequency band of the measuring base station, includes:

determining, by the measuring base station, an interfered frequency band of the measuring base station based on a frequency band used by the interfering base station and an interfered frequency band range specified by a protocol performance specification, ; or
performing , by the measuring base station, a measurement based on a full frequency band of the measuring base station itself, and determining the interfered frequency band of the measuring base station based on measurement results of different sub-frequency bands of the full frequency band; or
detecting, by the measuring base station, a channel quality of the interfering base station over the full frequency band of the measuring base station itself, and determining a frequency band wherein the channel quality exceeds the threshold as the interfering frequency band.

In another implementation of the first aspect, after the detecting, by the measuring base station, the reception quality value of the measurement reference signal of the interfering base station, the method further includes:

performing a layer 3 (L3) filtration to the reception quality value of the measurement reference signal of the interfering base station, and performing an interference evaluation according to the filtered value.
In another implementation of the first aspect, when the measurement reference signal of the interfering base station is a schedule-based reference signal, before the detecting, by the measuring base station, the reception quality value of the measurement reference signal of the interfering base station, the method further includes:

sending, by the measuring base station, a measurement request message to the interfering base station;
receiving, by the measuring base station, the schedule-based reference signal and configuration information of the schedule-based reference signal sent by the interfering base station according to the measurement request message.
In another implementation of the first aspect, the configuration information includes at least one of the following information: position indication information of the measurement reference signal, bandwidth configuration of the measurement reference signal, subframe configuration of the measurement reference signal, reporting configuration of the measurement reference signal, and transmission power configuration of the measurement reference signal;
where the position indication information is:

information indicating a central frequency and a measured bandwidth used for measuring the measurement reference signal; or information indicating a starting position and an ending position used for measuring the measurement reference signal; or information indicating a starting position and an offset used for measuring the measurement reference signal.

A second aspect of the invention provides an interference detection method, including:

receiving, by a user equipment (UE), a measurement control message sent by a measuring base station; where the measurement control message includes at least one of the following information: a detection range of the measurement reference signal of an interfering base station, a measured quantity to be measured, and a reporting mechanism of the measurement;

detecting, by the UE, a reception quality of a cell signal of the interfering base station according to the measurement control message;

reporting, by the UE, the reception quality of the cell signal of the interfering base station to the measuring base station; wherein, the detecting the reception quality of the cell signal of the interfering base station includes:

acquiring, by the UE, an interfered frequency band of the measuring base station;

detecting, by the UE, the reception quality of the cell signal of the interfering base station on the interfered frequency band of the measuring base station.

In another implementation of the second aspect, the acquiring, by the UE, the interfered frequency band of the measuring base station includes:

acquiring, by the UE, the interfered frequency band of the measuring base station determined by the measuring base station, wherein the interfered frequency band of the measuring base station is determined by the measuring base station based on a frequency band used by the interfering base station and an interfering frequency band range specified by a protocol performance specification; or performing, by the UE, a measurement based on a full frequency band of the measuring base station, and determining the interfered frequency band of the measuring base station based on measurement results of different sub-frequency bands of the full frequency band; or performing, by the UE, a measurement based on a full frequency band of the measuring base station, and reporting measurement results of different sub-frequency bands of the full frequency band to the measuring base station, so that the measuring base station determines the interfered frequency band of the measuring base station;

detecting, by the UE, a channel quality of the interfering base station over the full frequency band of the measuring base station, and determining a frequency band wherein the channel quality exceeds a threshold as an interfering frequency band; or

detecting, by the UE, a channel quality of the interfering base station over the full frequency band of the measuring base station, and reporting the channel quality of the interfering base station to the measuring base station, so that the measuring base station determines a frequency band wherein the channel quality exceeds a threshold as interfering frequency band.

In another implementation of the second aspect, after the detecting the reception quality of the cell signal of the interfering base station, the method further includes:

performing a layer 3 (L3) filtration to the reception quality of the interfering base station, and performing an interference evaluation according to the filtered value.

The above technical solutions have beneficial effects as follows: embodiments of the present invention provide the interference detection method and system for the base station, according to which long-term and stable channel measurement results can be provided and, thus, the intra-frequency, inter-frequency or inter-system interference detection and interference processing for uplink reception of the measuring base stations in the presence of the downlink transmission of an interfering base station in a complicated network condition are solved, where the measuring base station is in an adjacent frequency band of the interfering base station and the measuring base station and the interfering base station are in the same system or different systems, thereby ensuring flexible deployment and interference coexistence of networks.

**BRIEF DESCRIPTION OF THE DRAWINGS**

To make the technical solution of the present invention more clearly, the accompanying drawings used in the description of embodiments of the present invention are briefly described hereunder. Apparently, the accompanying drawings illustrate only some embodiments of the present invention, and persons skilled in the art can derive other drawings from these drawings without any creative efforts.

FIG. 1A is a schematic diagram of a DSS application scenario according to an embodiment of the present invention;

FIG. 1B is a schematic spectrum diagram of interference in an intra-frequency scenario according to an embodiment of the present invention;

FIG. 1C is a schematic spectrum diagram of interference in an inter-frequency scenario according to an embodiment of the present invention;

FIG. 1D is a schematic spectrum diagram of interference in an inter-frequency scenario according to an embodiment of the present invention;

FIG. 1E is a schematic diagram of a typical network element according to an embodiment of the present invention;

FIG. 2A is a schematic flowchart of a method according to an embodiment of present invention;

FIG. 2B is a schematic flowchart of a method according to an embodiment of present invention;

FIG. 3A is a schematic flow chart of a method according to an embodiment of present invention;

FIG. 3B is a schematic diagram of an interfered frequency band range according to an embodiment of present invention;

FIG. 4A is a schematic flowchart of a method according to an embodiment of present invention;

FIG. 4B-1 is a schematic diagram of scheduling positions of one antenna port SRS according to an embodiment of present invention;

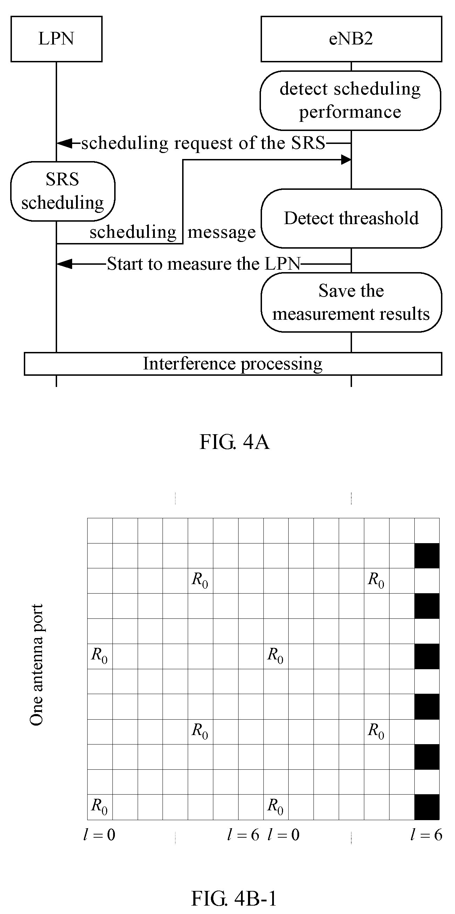

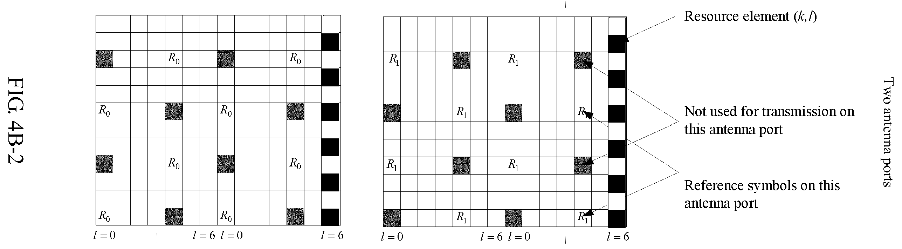

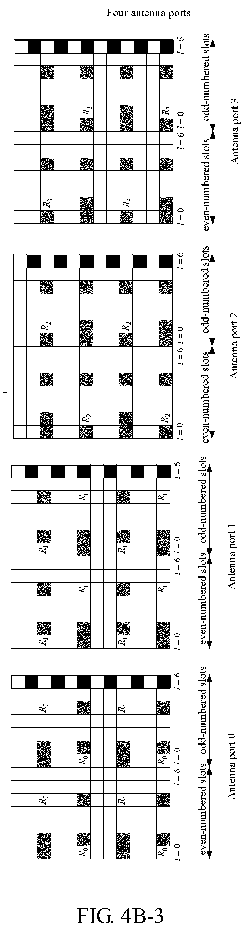

FIG. 4B-2 is a schematic diagram of scheduling positions of two antenna ports SRS according to an embodiment of present invention;

FIG. 4B-3 is a schematic diagram of scheduling positions of four antenna ports SRS according to an embodiment of present invention;

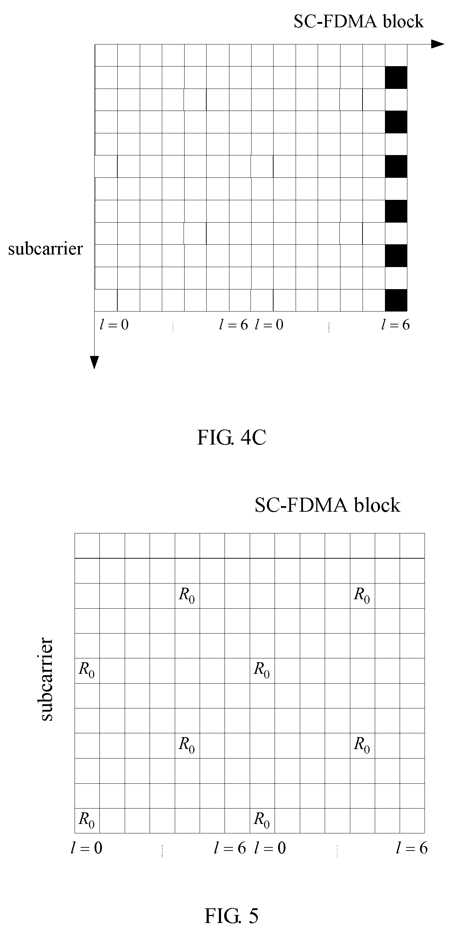

FIG. 4C is a schematic diagram of a SC-FDMA block and a subcarrier according to an embodiment of the present invention;

FIG. 5 is a schematic diagram of a SC-FDMA block and a subcarrier according to an embodiment of the present invention;

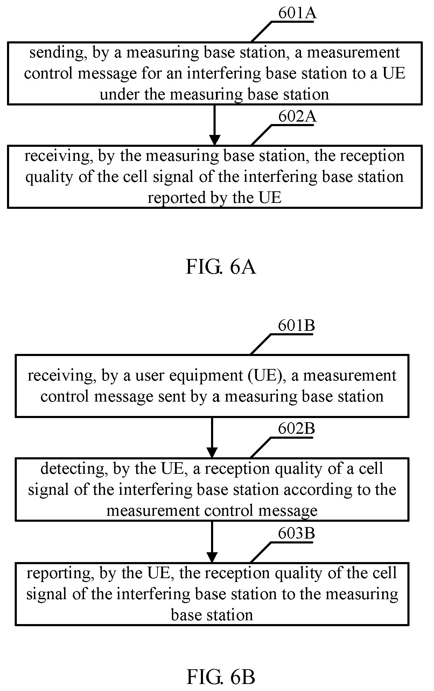

FIG. 6A is a schematic flowchart of a method according to an embodiment of present invention;

FIG. 6B is a schematic flowchart of a method according to an embodiment of present invention;

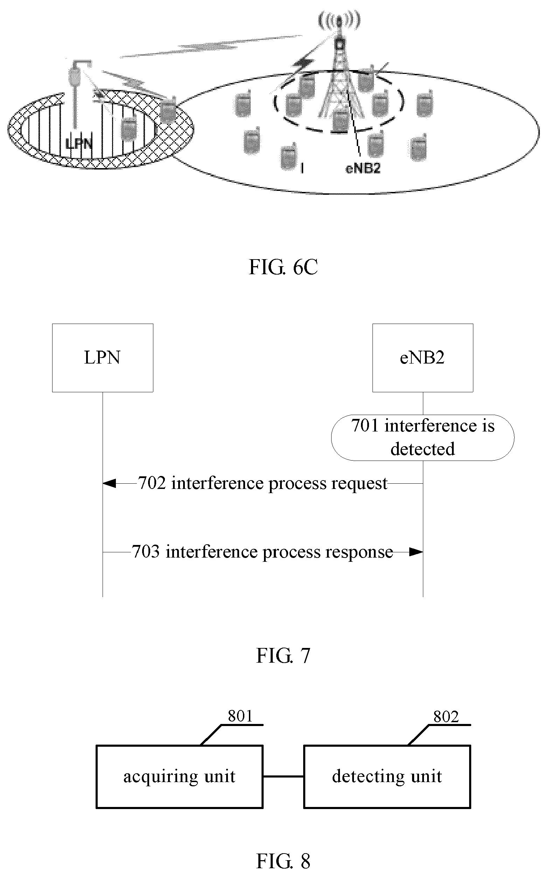

FIG. 6C is a schematic diagram of an application scenario according to an embodiment of the present invention;

FIG. 7 is a schematic flowchart of a method according to an embodiment of present invention;

FIG. 8 is a schematic structural diagram of a base station according to an embodiment of the present invention;

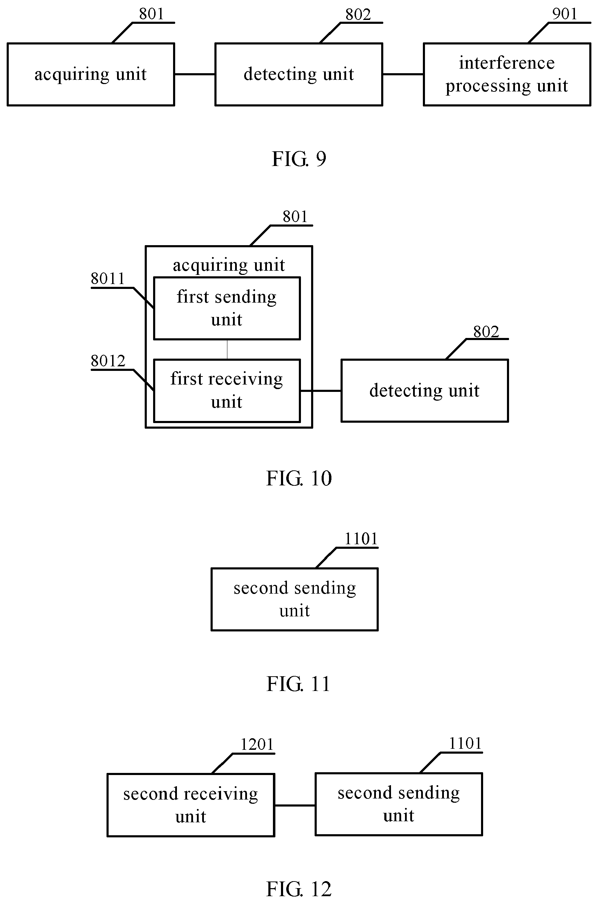

FIG. 9 is a schematic structural diagram of a base station according to an embodiment of the present invention;

FIG. 10 is a schematic structural diagram of a base station according to an embodiment of the present invention;

FIG. 11 is a schematic structural diagram of a base station according to an embodiment of the present invention;

FIG. 12 is a schematic structural diagram of a base station according to an embodiment of the present invention;

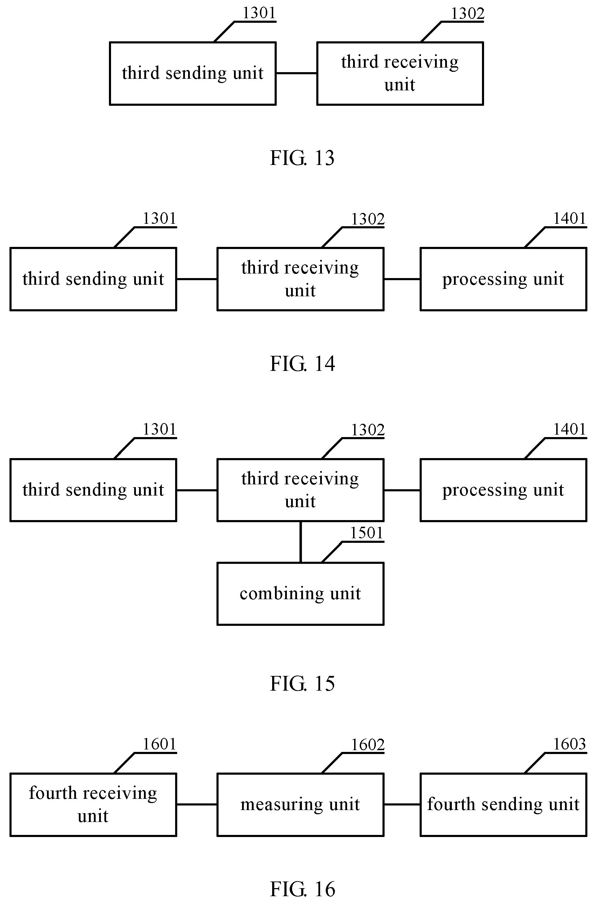

FIG. 13 is a schematic structural diagram of a base station according to an embodiment of the present invention;

FIG. 14 is a schematic structural diagram of a base station according to an embodiment of the present invention;

FIG. 15 is a schematic structural diagram of a base station according to an embodiment of the present invention;

FIG. 16 is a schematic structural diagram of a user equipment according to an embodiment of the present invention;

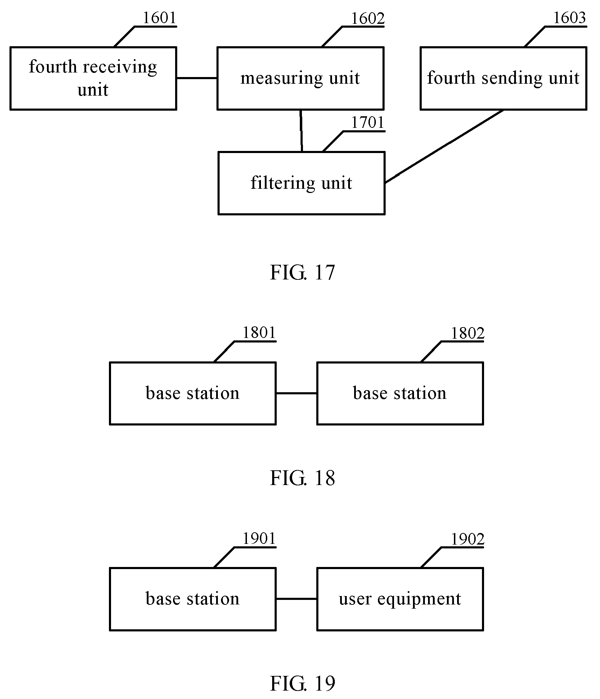

FIG. 17 is a schematic structural diagram of a user equipment according to an embodiment of the present invention;

FIG. 18 is a schematic structural diagram of a system according to an embodiment of the present invention; and

FIG. 19 is a schematic structural diagram of a system according to an embodiment of the present invention.

## DESCRIPTION OF EMBODIMENTS

The technical solutions in embodiments of the present invention are hereinafter described clearly and completely with reference to the accompanying drawings in embodiments of the present invention.

The technical solutions in embodiments of the present invention are hereinafter described clearly and completely with reference to the accompanying drawings in embodiments of the present invention. Obviously, the described embodiments are only a part of embodiments of the present invention, rather than all embodiments of the present invention. All the other embodiments obtained by persons skilled in the art based on the embodiments of the present invention without any creative efforts shall fall within the protection scope of the present invention.

An application scenario of embodiments of the present invention is the interference problem between a lower power node (Lower power node, LPN) adopting the dynamic spectrum sharing (Dynamic spectrum sharing, DSS) technology and a macro cell, or the interference problem between LPNs. LPN may be a pico cell, a micro cell, a relay, a home base station HeNB (HNB) and the like. For convenience of description, embodiments of the present invention are described by taking the interference between an LPN and a macro base station as an example, and the interference problem between LPNs or the interference problem between macro base stations can also use the same method; in the description of the embodiments, the macro base station is taken as a measuring base station, i.e., a base station performs interference measurement, which may also be referred to as an interfered base station; the LPN is taken as an interfering base station, i.e., a base station causing interference; it should be noted that the measuring base station may also be a LPN, which will not be described in other parts of embodiments of the present invention.

By adopting the DSS technology, N LPNs using frequent division duplex (Frequent Division Duplex, FDD) uplink (Uplink, UL) resources to send downlink signals may be generated within one macro base station, and the transmitted signals are received by a cell under the macro base station and a plurality of adjacent LPNs, thereby causing interference to the uplink of the macro cell or the adjacent LPNs.

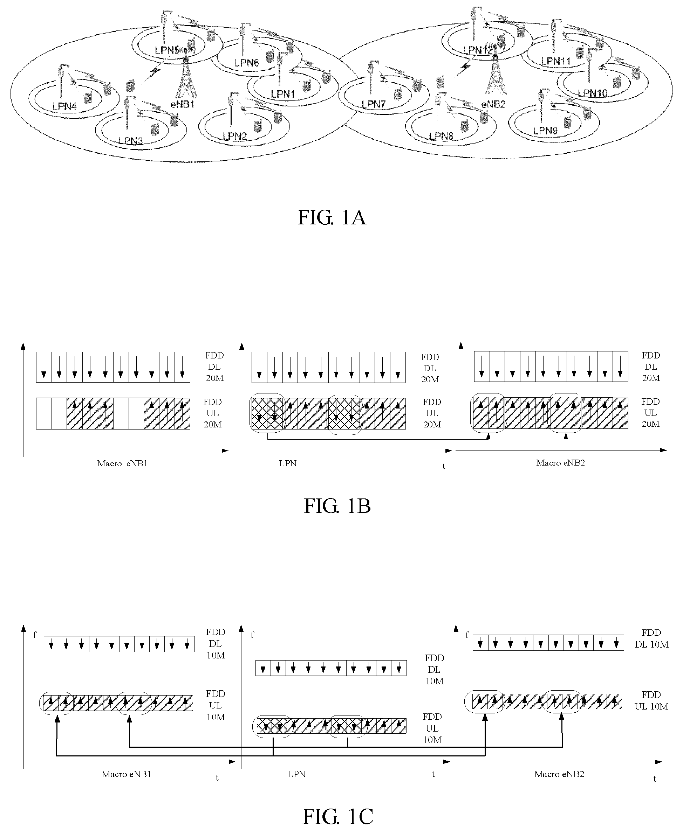

A DDS application scenario according to an embodiment of the present invention is shown in FIG. 1A, where the macro base station is represented by an eNB, and there are a plurality of LPNs in the coverage area of the eNB. Interference scenario may be an intra-frequency interference scenario, an inter-frequency interference scenario, and an inter-system interference scenario, and so on.

Where the schematic spectrum diagrams of the intra-frequency interference, inter-frequency interference or inter-system interference are as shown in FIGS. 1B to 1D:

FIG. 1B is the intra-frequency scenario, and FIG. 1C is the inter-frequency scenario. A macro base station eNB1 is a base station providing uplink resources to an LPN, and a macro base station eNB2 is an adjacent macro base station of the LPN. The downlinks of the eNB1, the eNB2 and the LPN are all represented by white boxes. Uplink subframes on uplink frequency ranges of the eNB1, the eNB2 and the LPN are all represented by oblique hatching. Downlink subframes on a downlink frequency range of the LPN are represented by grid hatching.

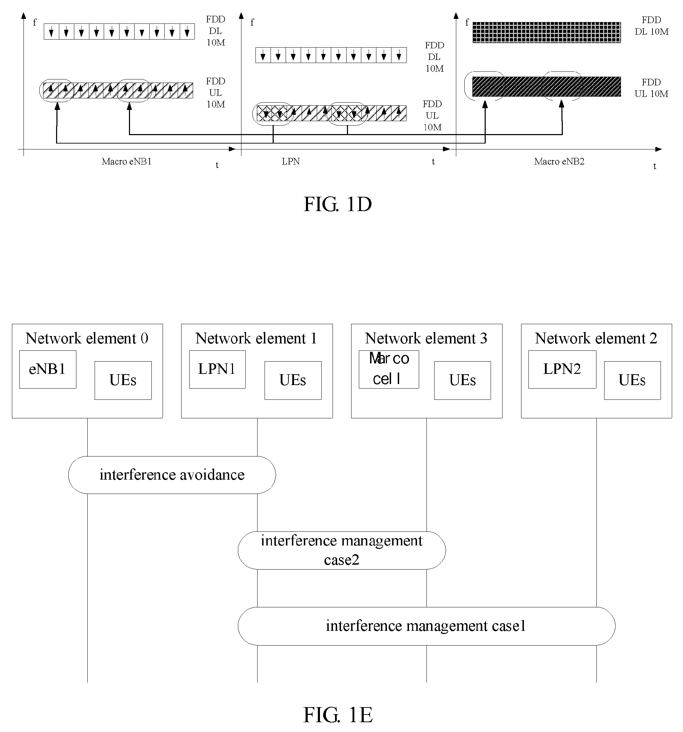

FIG. 1D is the inter-system scenario. A macro base station eNB1 is a base station providing uplink resources to an LPN, and a macro base station eNB2 is an adjacent macro base station of the LPN. Wherein the macro base station eNB1 and the LPN may either adopt the same access technology, or adopt different access technologies, and embodiments of the present invention are described by taking the case that the macro base station eNB1 and the LPN adopt the same access technology as an example, and for the case that the macro base station eNB1 and the LPN adopt different access technologies, the similar method is adopted, and no specific description is provided in embodiments of the present invention. A macro base station eNB2 adopts an access technology different from that adopted by the LPN. Downlinks of the eNB1 and the LPN are both represented by white boxes, uplink subframes on uplink frequency ranges of the eNB1 and the LPN are both represented by oblique hatching. Downlink subframes on a downlink frequency range of the LPN are represented by grid hatching.

Nodes involved in an interference coordination in the above scenarios and corresponding operations are shown in FIG. 1E, where four typical network elements are included:

Network element 0: the network element 0 is composed of the macro base station eNB1 providing resources to LPN cells and UEs under the macro base station eNB1, throughout this document, the problem of interference between the base station eNB1 providing resources and a LPN cell can be solved by interference avoidance. Therefore, the network element 0 is not involved in the problem of the interference detection and the interference processing with a network element 1.

Network element 1: the network element 1 is composed of an LPN1 and UEs under the LPN1, and creates interference on an adjacent LPN cell (network element 2) or a macro base station eNB2 (network element 3), thereby, the network element 1 can be an interfering base station.

Network element 2: the network element 2 is composed of an LPN cell (LPN2) adjacent to a time division duplex (Time Division Duplex, TDD) cell of the LPN, the LPN2 and UEs under the LPN2, and needs to detect the interference caused by the adjacent LPN1 and perform interference processing, thereby, the network element 2 can be a measuring base station.

Network element 3: the network element 3 is a macro cell adjacent to the TDD cell of the LPN, the macro cell may be an intra-frequency cell, an inter-frequency cell or an inter-system cell. The network element 3 is composed of the macro cell and UEs under the macro cell, and needs to detect the interference caused by the network element 1 and perform interference management with the network element 1, and the network element 3 can also be a measuring base station.

The embodiments of the present invention are mainly directed to a method solving the interference detection and the interference processing between the network element 1 and the network element 2, alternatively, solving the interference detection and the interference processing between the network element 1 and the network element 3. The technical solutions according to embodiments of the present invention are described by taking the interference detection and the interference processing between the network element 1 and the network element 3 as an example, and the interference detection and the interference processing between the network element 1 and the network element 2 can also adopt the technical solutions according to embodiments of the present invention, which will not be described in details.

In embodiments of the present invention, the interference detection may utilize a higher-layer measured quantity, such as a reference signal received power (Reference signal received power, RSRP) measurement, a reference signal received quality (Reference signal received quality, RSRQ) measurement, and a received signal strength indication (Received signal strength indication, RSSI) measurement, or utilize a physical layer measured quantity, such as a CQI measurement or a SRS measurement. Other measured quantities, which can achieve the same effect with the above measured quantities are not limited by embodiments of the present invention, therefore, the above examples of the measured quantity shall not be considered as a limitation to embodiments of the present invention; in embodiments of the present invention, such measured quantities are collectively referred to as a reception quality value of the measurement reference signal.

It should be noted that, besides the DSS scenario, any scenario having downlink transmission on receiving frequency band of the base station, such as on a FDD UL frequency range or adjacent to a FDD uplink frequency range, can adopt the technical solutions according to embodiments of the present invention, which is particularly:

a scenario having FDD downlink (Downlink, DL) transmission or TDD DL transmission, or transmission of other radio access technologies on the FDD UL frequency range or on other frequency ranges adjacent to the FDD UL frequency range (according to RAN4 performance specifications, adjacent frequency bands within the range of isolating bands are adjacent frequency bands having interference, such as near ~30MHz, or 50MHz, and specific data is determined by RAN4 simulation);

a scenario having DL transmission on a time slot corresponding to a TDD UL of the TDD frequency range or of other frequency ranges adjacent to the TDD frequency range (according to RAN4 performance specifications, adjacent frequency bands within the range of isolating bands are adjacent frequency bands having interference, such as near ~30MHz, or 50MHz, and specific data is determined by RAN4 simulation), where the DL transmission includes transmission of the same access technology of FDD mode or non-FDD mode, or different access technologies.

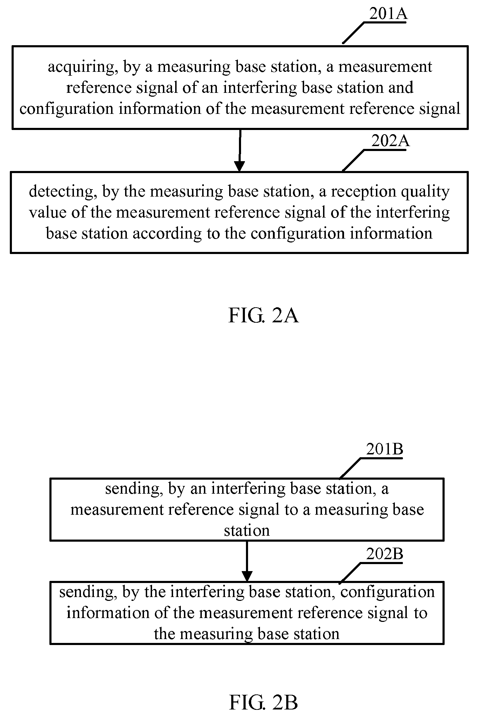

Embodiments of the present invention provide an interference detection method, as shown in FIG. 2A, the method includes:

201A: acquiring, by a measuring base station, a measurement reference signal of an interfering base station and configuration information of the measurement reference signal;

The measurement reference signal in the 201A includes one of the following: a common reference symbol (Common Reference Symbols, CRS) on a downlink subframe, a sounding reference signal (SRS) on a downlink subframe, a common reference symbol on an uplink subframe, and a sounding reference signal on an uplink subframe; each of the above four measurement reference signals corresponds to an application scenario of the interference detection, respectively, and the four application scenarios are illustrated and described in the subsequent embodiments, respectively.

In addition, the measurement reference signal may also be other reference signals for measurement, which are distributed on some physical radio blocks (Physical Radio block, PRB) on the uplink subframe or the downlink subframe of the interfering base station. A position occupied by the measurement reference signal can reflect a situation of the measurement signal sent by the interfering base station.

Optionally, when the measurement reference signal in 201A is a schedule-based reference signal, before the detecting the reception quality value of the measurement reference signal of the interfering base station, the method further including: sending, by the measuring base station, a measurement request message to the interfering base station; and receiving, by the measuring base station, the measurement reference signal and configuration information of the measurement reference signal sent by the interfering base station according to the measurement request message. The schedule-based reference signal is a reference signal scheduled by the base station, for example, a sounding reference signal in the present invention, optionally, common reference symbols on an uplink subframe may also be the schedule-based reference signal or other newly-designed reference signals may also be the schedule-based reference signal.

More specifically, the configuration information in 201A includes at least one of the following information: position indication information of the measurement reference signal, bandwidth configuration of the measurement reference signal, subframe configuration of the measurement reference signal, reporting configuration of the measurement reference signal, and transmission power configuration of the measurement reference signal; where the above position indication information is:

information indicating a central frequency and a measured bandwidth used for measuring the measurement reference signal; or
information indicating a starting position and an ending position used for measuring the measurement reference signal; or
information indicating a starting position and an offset used for measuring the measurement reference signal.

Further, before 201A, a method for automatically controlling whether to enable interference detection may exist. This embodiment provides two methods: the measuring base station acquires scheduling performance of the cells under the measuring base station itself, and performing the detection if the scheduling performance of the cells is degraded; or the measuring base station detects a reception quality value of a reference signal of the measuring base station itself, where the reference signal of the measuring base itself detected by the measuring base station is the common reference symbol sent by the measuring base station. The measuring base station performs the detection if the reception quality value of the reference signal of the measuring base station is lower than a set threshold. It should be noted that, the above two examples are illustrated, rather than exhaustion of conditions for enabling the interference detection and should not be considered as a limitation to embodiments of the present invention.

202A: detecting, by the measuring base station, a reception quality value of the measurement reference signal of the interfering base station according to the configuration information.

Embodiments of the present invention provide the interference detection method and system for the base station, according to which long-term and stable channel measurement results can be provided and, thus, the intra-frequency, inter-frequency or inter-system interference detection and interference processing for uplink reception of the measuring base stations in the presence of the downlink transmission of an interfering base station in a complicated network condition are solved, where the measuring base station is in an adjacent frequency band of the interfering base station and the measuring base station and the interfering base station are in the same system or different systems,, thereby ensuring flexible deployment and interference coexistence of networks.

Optionally, the implementation of 202A may include: determining, by the measuring base station, an interfered frequency band; and detecting, by the measuring base station, the reception quality value of the measurement reference signal of the interfering base station on the interfered frequency band.

More specifically, embodiments of the present invention provide a plurality of methods for determining an interfered frequency band by the measuring base station as follows:

The measuring base station, based on the frequency band used by the interfering base station and an interfering frequency band range specified by protocol performance specifications, determines the interfered frequency band of the measuring base station; or

The measuring base station performs a measurement based on a full frequency band of the measurement base station itself, and determines the interfered frequency band of the measuring base station based on measurement results of different subfrequency bands of the full frequency band; or the measuring base station detects channel quality of the interfering base station over the full frequency band of the measurement base station itself, and determines a frequency band where the channel quality exceeds the threshold as the interfering frequency band.

Further, after 202A, an interference processing procedure may also be performed. When the reception quality value of the measurement reference signal is higher than a set threshold, the measuring base station enables an interference processing procedure with the interfering base station, wherein the interference processing procedure includes: sending, by the measuring base station, an interference processing request to the interfering base station according to the measurement results; or canceling, by the measurement base station, a data resource scheduling on the interfered subframe; or performing, by the measurement base station, a data resource scheduling only on a user equipment (UE) with the interference measured on the interfered subframe which is lower than the set threshold.

The interference processing request includes at least one of the following information: transmission power information to be adjusted, time domain position indication information or frequency domain position indication information of a resource to be power controlled, and parameter indication information to be adjusted; where the parameter indication information to be adjusted includes at least one of the following information: a working central frequency of the cell under the interfering base station, a working frequency band of the cell under the interfering base station, changing information of downlink subframe offset of the cell under the interfering base station, changing information of uplink and downlink configuration of the cell under the interfering base station, and changing information of a tilt angle of an antenna of the cell under the interfering base station.

The interference processing procedure will be described in details in the subsequent solution six and solution seven.

Further, after detecting the reception quality value of the measurement reference signal of the interfering base station, the method further includes: performing a layer 3 (L3) filtration to the reception quality value of the measurement reference signal of the interfering base station, and performing an interference evaluation according to the filtered value.

The above embodiments are the solutions for interference detection implemented by the measuring base station, correspondingly, the implementations of the interfering base station, referring to FIG. 2B, includes:

201B: sending, by an interfering base station, a measurement reference signal to a measuring base station, wherein a sending power of the measurement reference signal of the interfering station is the same as a transmission power of a common reference symbol on a downlink subframe of the interfering station;

202B: sending, by the interfering base station, configuration information of the measurement reference signal to the measuring base station, so that the measuring base station detects a reception quality value of the measurement reference signal of the interfering base station according to the configuration information.

Corresponding to the solutions on the measuring base station side, in this embodiment:

The above measurement reference signal comprises one of the following: a common reference symbol on a downlink subframe, a sounding reference signal on a downlink subframe, a common reference symbol on an uplink subframe, and a sounding reference signal on an uplink subframe.

In addition, the measurement reference signal may also be other reference signals for measurement, and such referene signals are distributed on some physical radio blocks (Physical Radio block, PRB) on the uplink subframe or the downlink subframe of the interfering base station. A position occupied by the measurement reference signal can reflect a situation of the measurement signal sent by the interfering base station.

Optionally, before sending, by the interfering base station, the configuration information of the measurement reference signal to the measuring base station, the method further includes: receiving, by the interfering base station, a measurement request message sent by the measuring base station; and sending, by the interfering base station the measurement reference signal and the configuration information of the measurement reference signal to the measuring base station according to the measurement request message.

Optionally, the configuration information comprises at least one of the following information: position indication information of the measurement reference signal, bandwidth configuration of the measurement reference signal, subframe configuration of the measurement reference signal, reporting configuration of the measurement reference signal, and transmission power configuration of the measurement reference signal; wherein the position indication information is:

information indicating a central frequency and a measured bandwidth used for measuring the measurement reference signal; or
information indicating a starting position and an ending position used for measuring the measurement reference signal; or
information indicating a starting position and an offset used by for measuring the measurement reference signal.

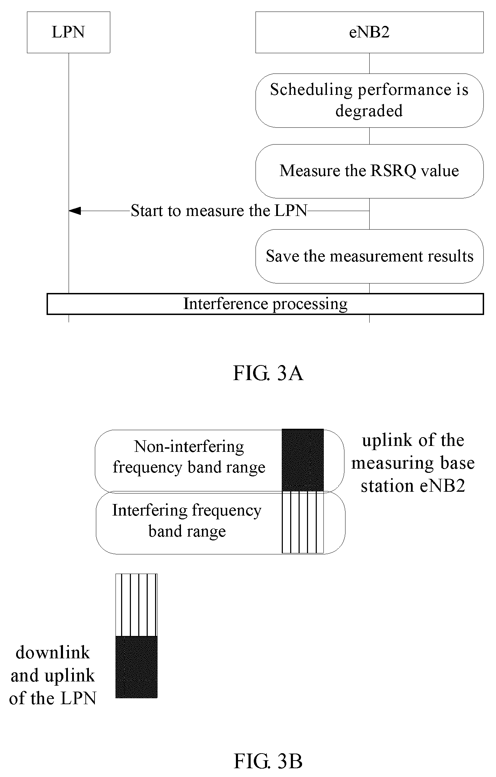

Solution one: embodiments of the present invention provide an interference detection method, and in solution one, the measuring base station eNB2 detects common reference symbols (Common Reference Symbols, CRS) on the downlink subframe of the LPN of the interfering base station , where the measuring base station performs the interference detection to the LPN of the interfering base station LPN as a special UE. The procedure of the first solution is as shown in FIG. 3A, and includes: detecting, by the measuring base station eNB2, a condition for enabling an interference detection is satisfied (for example, a degradation of the scheduling performance of the measuring base station itself is detected, or a deterioration of the signal quality of the measuring base station itself is detected, e.g., the signal quality of the common reference symbol of the measurement base station itself reported by the UE is lower than a set threshold (RSRQ threshold)); enabling a measurement to the LPN of the interfering base station; saving and processing measurement results, where the measuring base station eNB2 performs the interference processing. The procedure of performing the interference detection by the measuring base station eNB2 may be classified into three steps:

Step 1: firstly, the measuring base station eNB2 configures a downlink measurement (generates the configuration information of the measurement reference signal), and in this case, the measurement entity is the measuring base station eNB2, rather than a UE which is the conventional execution entity of a downlink measurement, and the specific configuration includes:

Measured quantity: the base station eNB2 can support measurements of a RSRP, a RSRQ and a RSSI.
Measured object: the measured object may be a frequency point and a bandwidth of the measured cell, an identity (Identity, id) of the measured cell, a downlink and uplink configuration of the measured cell, an offset of the measured cell, a MBSFN configuration or a blank frame configuration of the measured cell and an antenna configuration of the measured cell, and such information may be acquired through an existing interface, such as an X2 interface in a long term evolution (Long Term Evolution, LTE) system, or an Iur interface in a universal mobile telecommunications system (Universal Mobile Telecommunications System, UMTS) or similar interfaces in other systems. But for the measurement of interference-like, the measurement entity needs to remain within the range of a working frequency band of the interfered base station for performing the measurement of the signal of the interfering cell. Therefore, the central frequency point of the measured cell in the measured object may be set to the central frequency point of the interfered cell, or the central frequency point of the measured cell in the measured object is set to a frequency point within the range of the interfering frequency band of the interfered cell. In this case, the central frequency point of the measured cell in the measured object can be autonomously searched according to a certain granularity (for example, in terms of the LTE system, a granularity of 6RB may be adopted).

In addition, if the interfering frequency band is determined by the measuring base station in a certain manner, the position indication information of the measurement reference signal, the bandwidth configuration of the measurement reference signal and the subframe configuration of the measurement reference signal, which are included in the measured object, are embodied in the measured object, so as to instruct the measuring base station to perform interference detection to the measurement reference signal on the physical resource blocks.

Configuration of measurement event: the measuring base station eNB2 can support all the measurement events supported by a UE in principle, such as in the LTE, from A1-A5, B1 and B2, and etc.; in the scenario of interference detection, the main configuration is to detect whether the RSRQ value is higher or lower than the set threshold value. Because the measurement purposes are different, that is, the downlink measurement in the prior art is for mobility while the downlink measurement of the interference detection is for interference measurement, events with similar event meanings use thresholds different from each other.

Therefore, in the scenario that the measuring base station performs detection, the measurement results will be relatively stable, and disturbed by the environment only, since both the LPN and the interfering base station are static base stations. Thus, the detector is low speed, and it may be considered that time to trigger (Time To Trigger, TTT) parameters are not applicable when reporting the measurement results. Processing of measurement results: for measurement results reported from the physical layer to a higher-layer, the measuring base station eNB2 can perform a layer 3 (Layer 3, L3) filtration, and the parameters for the L3 filtration used by the base station can be configured according to those used by a low-speed UE.

Step 2: the measuring base station eNB2 enables the measurement of interference for the LPN. When to start the measurement for an adjacent LPN (interfering base station) may be determined in two manners, where one manner is implemented within the measuring base station eNB2, that is, when to start the measurement is determined by the measuring base station eNB2 according

ing to a degradation of the scheduling performance of cells under the base station, for example, if a block error rate (Block Error Rate, BLER) of the data on the eNB2 exceeds a set value within a downlink transmission time slot of the LPN, the measuring base station eNB2 determines that the interference is caused by the LPN. Or, if the BLER of the data on the eNB2 exceeds the set value shortly after changing the configuration of the LPN, the eNB2 determines the interference is caused by the LPN, and then enables a measurement for the LPN. The other manner may be that, the measuring base station eNB2 detects a RSRQ value of the base station itself, where, in particular, CRS detections of a subframe corresponding to a downlink subframe of the LPN and a subframe corresponding to an uplink subframe of the LPN may not be distinguished, and in this case, if the RSRQ value of the base station itself is lower than the set threshold value, the base station enables a measurement of RSRQ for the LPN. Or, when the measuring base station eNB2 detects a RSRQ value of the base station itself, CRS detections of a subframe corresponding to a downlink subframe of the LPN and a subframe corresponding to an uplink subframe of the LPN are distinguished, and when the detected RSRQ value corresponding to a downlink subframe of the LPN is lower than the set threshold value, the base station enables a measurement of RSRQ for the LPN.

Step 3: the measuring base station eNB2 detects only the RSRQ value on the downlink subframe when detecting the downlink interference of the LPN. When the detected RSRQ value is higher than the set threshold value, the measuring base station eNB2 may save the measurement result, and enable the interference processing procedure with the LPN.

When the measuring base station eNB2 is interfered by only a part of frequency bands of the LPN, as shown above, the measuring base station eNB2 can obtain the following configuration information through the existing interfaces: a frequency point and a bandwidth of the cell, an ID of the cell, a downlink and uplink configuration of the cell, an offset of the cell, a multimedia broadcast multicast service over the single frequency network (Multimedia Broadcast Multicast Service over the single frequency network, MBSFN) configuration or a blank frame configuration of the cell, an antenna configuration of the cell, and so on. The measuring base station eNB2 can learn which part of the frequency band of the LPN has interference on the measuring base station eNB2 itself according to RAN4 performance specifications. Alternatively, the measuring base station eNB2 performs a measurement of CRS over the full frequency band of the LPN on the measuring base station itself, and then analyzes the measurements results to determine that the CRS of which frequency band has a larger interference value, and determines the corresponding part of frequency band has interference on the measuring base station eNB2.

The measuring base station eNB2 can implement the measurement on a part of frequency band in two manners: one manner is to modify RSRQ measurement, and support RSRQ measurement of narrow band, and the other manner is to modify CQI, and perform a L3 filtration to CQI measurement results.

Manner 1: in order to measure the RSRQ value of the frequency band which causes interference on the measuring base station eNB2 of the LPN accurately, the measurement should be performed to a part of the common reference symbols (common reference signaling, CRS), rather than all of the CRSs.

As shown in FIG. 3B, the uplink non-interfering frequency band range and the interfering frequency band range of the measuring base station eNB2 are illustrated; and the downlink and uplink non-interfering frequency band range and the interfering frequency band range of the LPN are illustrated.

To notify positions of the part of the CRSs, the positions may be expressed in a manner of indicating a central frequency and a bandwidth (that is, information indicating a central frequency and a measured bandwidth used for measuring the measurement reference signal), or in a manner of indicating a starting frequency and an ending frequency respectively (that is, information indicating a starting position and an ending position used for measuring the measurement reference signal), or in a manner of indicating a starting frequency and an offset (that is, information indicating a starting position and an offset used for measuring the measurement reference signal).

When the interfered or interfering frequency band is a part of the frequency band, the CRS range to be measured is indicated in this measured object, such as:

```
    Option 1: a central frequency of the CRS +
a measured bandwidth of the CRS method
    MeasObjectEUTRA ::= SEQUENCE {
        carrierFreq ARFCN-ValueEUTRA,
        allowedMeasBandwidth AllowedMeasBandwidth,
         presenceAntennaPort 1 PresenceAntennaPort
1,
        measured_carrierFreq ARFCN-ValueEUTRA,
(fc of CC or fc of CRS)
         measured_bandwidth Measured_bandwidth
or measured PRBs
           (bandwidth of partial carrier or CRS)
    or, option 2: a starting position and an
ending position of the measured CRS
    MeasObjectEUTRA ::= SEQUENCE {
        carrierFreq ARFCN-ValueEUTRA,
        allowedMeasBandwidth AllowedMeasBandwidth,
         presenceAntennaPort 1 PresenceAntennaPort
1,
          measured_carrierFreq_start ARFCN-
ValueEUTRA,
          measured_carrierFreq_stop ARFCN-
ValueEUTRA,
    or, option 3: a starting position of the
measured CRS + an offset
```

```
    MeasObjectEUTRA ::= SEQUENCE {
        carrierFreq ARFCN-ValueEUTRA,
        allowedMeasBandwidth AllowedMeasBandwidth,
         presenceAntennaPort 1 PresenceAntennaPort
1,
          measured_carrierFreq_start ARFCN-
ValueEUTRA,
          measured_carrierFreq_offset
Measured_bandwidth or measured PRBs
```

In option 3, if the starting position of the measured CRS is in low frequency, the offset value is positive, and if the measured position of the measured CRS is in high frequency, the offset value is negative.

In addition to the above methods, UE can also perform, based on a set granularity such as a measured bandwidth of 6RB or 1.25MHz, an intra-frequency measurement or an inter-frequency measurement from a high frequency to a low frequency or from a low frequency to a high frequency within the range of the base station of a serving cell.

In this case, in order to reduce the produced inter-frequency measurement, the measurement is maintained as the intra-frequency measurement, since the measuring base station eNB2 can modify frequency points of the frequency band of the CRS without changing configuration of frame control (fc) field of the measured frequency point even if only a part of CRSs are detected. Or, all the measurements within the received frequency band range of the measuring base station eNB2 are deemed as intra-frequency measurements by the measuring base station eNB2.

Or, the UE keeps the measured fc be the central frequency point of the serving cell, detects the reference signals of adjacent cells within the whole frequency band range of the serving cell, performs a L3 filtration to the measurement result of the part of interfering signals (such as CRS symbol in the interfering frequency band range in FIG. 3B) whose interfering signal quality exceeds the threshold, and performs interference evaluation and interference reporting based on the filtered measurement result. For the part of interfering signals (such as CRS symbol in the non-interfering frequency band range in FIG. 3B) whose interference signal quality is lower than the threshold, the L3 filtration is not performed, and such interfering signals are not evaluated as the interfering signal and not reported as an event.

The above part of interfering signals (such as CRS symbol in the interfered frequency band range in FIG. 3B) whose interfering signal quality exceeds the threshold can also be determined as the interfering frequency band, and the measuring base station performs the L3 filtration to signals in the interfering frequency band and performs interference evaluation and interference reporting based on this.

Manner 2: the measuring base station eNB2 may measure a part of the interfered frequency band by measuring the CQI.

First, the interference measurement for the LPN is enabled. When to start the measurement for an adjacent LPN may be determined in two manners, where one manner is implemented within the measuring base station eNB2, that is, when to start the measurement is determined by the eNB2 according to a degradation of the scheduling performance of cells under the base station, for example, if a BLER of the data on the eNB2 exceeds the set value within a downlink transmission time slot of the LPN, the measuring base station eNB2 determines that the interference is caused by the LPN. Or, if the BLER of the data on the eNB2 exceeds the set value shortly after changing the configuration of the LPN, the eNB2 determines the interference is caused by the LPN, and then enables a measurement for the LPN. The other manner may be that, eNB2 detects a RSRQ value of the base station itself, where, in particular, CRS detections of a subframe corresponding to a downlink subframe of the LPN and a subframe corresponding to an uplink subframe of the LPN may not be distinguished, and in this case, if the RSRQ value of the base station itself is lower than the set threshold value, the base station enables a measurement of RSRQ for the LPN. Or, when the measuring base station eNB2 detects a RSRQ value of the base station itself, CRS detections of a subframe corresponding to a downlink subframe of the LPN and a subframe corresponding to an uplink subframe of the LPN are distinguished,, and when the detected RSRQ value corresponding to a downlink subframe of the LPN is lower than the set threshold value, the base station enables a measurement of RSRQ for the LPN.

Then, the measured bandwidth of the CQI is configured as the bandwidth of the interference area, in this case, the bandwidth of the interference area may be the whole bandwidth of the adjacent cells or a part of the bandwidth of the adjacent cells. The measuring base station eNB2 can perform a CQI measurement with specified bandwidth, just like UE. Since CQI is a dynamic measurement result supporting scheduling, for obtaining a long-term measurement result of the interference condition, the measuring base station eNB2 can perform the L3 filtration to the dynamic measurement result to obtain a filtered higher-layer measurement result.

Solution two: in this solution, the measuring base station detects sounding reference signals on a downlink subframe of the LPN of the interfering base station, and the base station takes the LPN as a special UE to perform the detection of sounding reference signals. As shown in FIG. 4A, the procedure of detecting, by the eNB2, sounding reference signals (Sounding Reference signal, SRS) sent on a downlink subframe of the LPN may include: if a degradation of the scheduling performance of cells under the base station itself or a scheduling performance worse than a certain threshold is detected by the measuring base station eNB2 , the eNB2 sends a scheduling request of sounding reference signals (SRS) to the LPN of the interfering base station, so as to request the LPN to enable the scheduling of sounding reference signals on a downlink subframe for interference detection, and the LPN performs the SRS scheduling after receiving the scheduling request. After sending the scheduling request message of sounding reference signals to the LPN, the eNB2 may configure configuration information based on the measurement of sounding reference signals. The configuration information may include:

Measured quantity: measured quantities such as a RSRP, a RSRQ and a RSSI.

Measured object: the measured object may be a frequency point and a bandwidth of the measured cell, an identity (Identity, id) of the measured cell, a downlink and uplink configuration of the measured cell, an offset of the measured cell, a MBSFN configuration or a blank frame configuration of the measured cell and an antenna configuration of the measured cell, and such information may be acquired through an existing interface, such as an X2 interface in a long term evolution (Long Term Evolution, LTE) system, or an Iur interface in a universal mobile telecommunications system (Universal Mobile Telecommunications System, UMTS) or similar interfaces in other systems. But for the measurement of interference-like, the measurement entity needs to stay within the range of a working frequency band of the interfered base station for performing the measurement of the signal of the interfering cell signal. Therefore, the central frequency point of the measured cell in the measured object may be set to the central frequency point of the interfered cell, or the central frequency point of the measured cell in the measured object is set to a frequency point within the range of the interfering frequency band of the interfered cell. In this case, the central frequency point of the measured cell in the measured object can be autonomously searched according to a certain granularity (for example, in terms of a LTE system, a granularity of 6RB may be adopted). In addition, if the interfering frequency band is determined by the measuring base station in a certain manner, the position indication information of the measurement reference signal, the bandwidth configuration of the measurement reference signal and the subframe configuration of the measurement reference signal, which are included in the measured object, are embodied in the measured object, so as to instruct the measuring base station to perform interference detection to the measurement reference signal on the physical resource blocks.

Configuration of measurement event: the measuring base station eNB2 can support all the downlink measurement events, such as in an LTE, from A1-A5, B1 and B2, and etc.; in solution two and solution three, definition of similar events can be used to indicate interference triggering condition of adjacent cells which is detected based on sounding reference signals on a downlink subframe or sounding reference signals on an uplink subframe. The configuration of uplink measurement events is similar to the configuration of downlink events, that is, the meaning of the events is the same, such as comparisons between the reception quality value of the serving cell (measuring base station) or an adjacent cell (interfering base station) and an absolute threshold or a relative threshold (the comparison between the reception quality values of the servicing cell (the measuring base station) and the adjacent cell (interfering base station), and a relative offset is added). Because the measurement purposes are different, that is, the downlink measurement in the prior art is for mobility while the uplink interference detection is for interference measurement, events with similar event meanings use thresholds different from each other.

Processing of measurement results: the measuring base station eNB2 can perform a layer 3 (Layer 3, L3) filtration to measurement results reported from the physical layer to a higher-layer, and the parameters for the L3 filtration used by the base station can be configured according to those used by a low-speed UE.

After receiving the scheduling request message of sounding reference signals, the LPN enables the scheduling of sounding reference signals (SRS) on a downlink subframe for interference detection, and sends the configuration information of the sounding reference signals (SRS) including a scheduling message to the eNB2, so that the eNB2 can perform an interference detection based on the sounding reference signals;

The eNB2 enables the interference detection based on the sounding reference signals after the scheduling message of sounding reference signals is received. If the detected measured quantity of the sounding reference signals satisfies a set event threshold, the eNB2 saves and processes the measurement result, and initiates the interference processing process with the LPN.

LPN sends the sounding reference signals on the downlink subframe. To make it possible that the measuring base station eNB2 can detect the downlink channel quality of the LPN just like detecting the sounding reference signals (Sounding Reference signal, SRS) of the UE, on the downlink subframe of the LPN, resources which are the same as that of the sounding reference signals of the UE should be scheduled and sounding reference signals which are the same as that of the uplink of the UE should be transmitted, where the transmission power of the sounding reference signals are the same as that of the common reference symbol (CRS) on the downlink subframe of the LPN. The sounding reference signal is located on the last symbol on a UL subframe, but the bandwidth occupied by the sounding reference signal can be configured by the system. In order to make it possible that the symbol of the sounding reference signals (SRS) of the LPN can be detected by the measuring base station eNB2, the LPN needs to notify configuration information of the sounding reference signals to the eNB2. The specific procedure is:

Step 1: the LPN schedules sounding reference signals on a downlink subframe and, particularly, the scheduled positions of the SRS on the downlink subframe of the LPN in the cases of one antenna port, two antenna ports and four antenna ports are shown as FIG. 4B-1 to FIG. 4B-3:

FIG. 4B-1 to FIG. 4B-3, in turn, are: one antenna port: One antenna port; two antenna ports: Two antenna ports; four antenna ports: Four antenna ports; even-numbered slots: even-numbered slots; odd-numbered slots: odd-numbered slots; From top to bottom, in turn, are: antenna port 0: Antenna port 0; antenna port 1: Antenna port 1; antenna port 2: Antenna port 2; antenna port 3: Antenna port 3;

Black squares are resource element (K, L): Resource element (k, l);

White squares are to indicate: not used for transmission on this antenna port: Not used for transmission on this antenna port;

The squares marked with $R_0$ are to indicate: reference symbols on this antenna port: Reference symbols on this antenna port.

The sounding reference signal is scheduled on the last symbol of each radio block (Radio block, RB) on a downlink subframe, and each sounding reference signal isolates a subcarrier. The configuration information of sounding reference signals on a downlink subframe of the LPN of the interfering base station includes: bandwidth configuration of the sounding reference signals, subframe configuration of the sounding reference signals and reporting configuration of the sounding reference signals. Besides, sending subframe configuration of the sounding reference signals should be notified to the eNB2. The sending power of the SRS of the LPN and the transmission power of the common reference symbol (CRS) of the LPN are the same.

Step 2: the measuring base station eNB2 enables the interference detection for the LPN, and the enabling method is the same as enabling the measurement for the LPN in step 2 of the first proposal, which will not be described in details herein.

Step 3: the measuring base station eNB2 notifies the LPN that the measurement for the LPN should be enabled, and the eNB2 sends the measurement request through a direct or indirect interface between the LPN and the eNB2. In this measurement request, the eNB2 notifies the LPN that the interference of the LPN should be measured.

Step 4: After receiving the measurement request message, the LPN enables the scheduling of sounding reference signals sent on the downlink subframe, and sends a scheduling configuration to eNB2;

where the scheduling configuration of sounding reference signals includes: bandwidth configuration of the sounding reference signals, subframe configuration of the sounding reference signals and reporting configuration of the sounding reference signals. To support measurement of eNB2, LPN also needs to send a transmission power configuration on the sounding reference signals to eNB2.

Step 5: the measuring base station eNB2 detects the sounding reference signals on the LPN. Since the interference is a long-term measurement result, the eNB2 needs to perform a L3 filtration to the measured value of the sounding reference signals, where the specific algorithm for the L3 filtration is similar to a L3 filtration of a UE. Also, since a higher-layer measurement is supported, the scheduling period of the SRS on a downlink subframe of the LPN also can be set to be longer, as long as the needs of the higher-layer measurement in RAN4 is satisfied.

Solution 3: in this solution, the interfering base station LPN sends sounding reference signals of the LPN on a UL subframe, where the transmitting power of the sounding reference signals is the same as the transmission power of the common reference symbol (CRS) on the downlink subframe.

The specific operational procedure is similar with solution two, and the differences lie in the following:

Step 1: the interfering base station LPN schedules uplink sounding reference signals which are similar as uplink sounding reference signals of a UE on an plink subframe and, particularly, the scheduling positions of sounding reference signals on the UL subframe are single carrier frequency division multiple access (Single Carrier Frequency Division Multiple Access, SC-FDMA) blocks and subcarriers shown in FIG. 4C. The sounding reference signal is scheduled on the last symbol of each radio block (RB), and each sounding reference signal isolates a subcarrier. The configuration information of sounding reference signals on an uplink subframe of the LPN includes: bandwidth configuration of the sounding reference signals, subframe configuration of the sounding reference signals and reporting configuration of the sounding reference signals.

Besides, sending subframe configuration of the sounding reference signals should be notified to the eNB2. The sending power of the sounding reference signals of the LPN and the transmission power of the CRS of the LPN are the same. The configuration of the sounding reference signals on LPN is similar as the configuration of the SRS on an uplink subframe of a common UE. The sounding reference signal is located on the last symbol on a UL subframe, but the bandwidth occupied by the sounding reference signal can be configured by the system.

Steps 2 and 3 in this solution are the same as steps 2 and 3 in solution two.

Step 4: After receiving the message, the LPN enables the scheduling of sounding reference signals sent on the uplink subframe, and sends a scheduling configuration of sounding reference signals to the eNB2; the scheduling configuration of sounding reference signals includes: bandwidth configuration of the sounding reference signals, subframe configuration of the sounding reference signals and reporting configuration of the sounding reference signals. Besides, sending subframe configuration of the SRS and transmission power configuration of the SRS should be notified to the eNB2.

The processing of step 5 in this solution is the same as step 5 in solution two.

Solution four: in this solution, the interfering base station LPN sends a newly-defined uplink common reference symbol on a UL subframe, and the measuring base station eNB2 detects the new uplink common reference symbol to perform an uplink measurement for the LPN. The position of the newly-set common reference symbol on a UL subframe can refer to the position of a DL common reference symbol. The reference symbols occupy some resource elements (resource element, RE) in the whole PRB uniformly. Specific symbols which are similar as the sounding reference signals can be used. The uplink common symbols may set to be service code frequency division multiple access (Single Carrier Frequency Division Multiple Access, SC-FDMA) blocks and subcarriers shown in FIG. 5. The LPN can send the uplink common symbol on the uplink subframe, and the transmission power of the uplink common symbol is the same as the transmission power of the downlink CRS. The uplink common symbols may be distributed on the positions marked with Ro.

The measurement method may be similar to the measurement of the downlink (Downlink, DL) in solution one, except that the direction of the measurement is changed to an uplink measurement.

Step 1: firstly, the measuring base station eNB2 configures the uplink measurement and, specifically, the configuration comprises:

Measured quantity: the measuring base station eNB2 can support measurements of a RSRP, a RSRQ and a RSSI. The measurement is based on the newly-set uplink CRS reference signal.

Measured object: the measured object may be a frequency point and a bandwidth of the measured cell, an identity (Identity, id) of the measured cell, a downlink and uplink configuration of the measured cell, an offset of the measured cell, a MBSFN configuration or a blank frame configuration of the measured cell and an antenna configuration of the measured cell, and such information may be acquired through the existing interfaces, such as an X2 interface in a long term evolution (Long Term Evolution, LTE) system, or an Iur interface in a universal mobile telecommunications system (Universal Mobile Telecommunications System, UMTS) or similar interfaces of other systems. But for the measurement of interference-like, the measurement entity needs to stay within the range of a working frequency band of the interfered base station for performing the measurement of the signal of the interfering cell. Therefore, the central frequency point of the measured cell in the measured object may be set to the central frequency point of the interfered cell, or the central frequency point of the measured cell in the measured object is set to a frequency point within the range of the interfering frequency band of the interfered cell. In this case, the central frequency point of the measured cell in the measured object can be autonomously searched according to a certain granularity (for example, in terms of a LTE system, a granularity of 6RB may be adopted).

In addition, if the interfering frequency band is determined by the measuring base station in a certain manner, the position indication information of the measurement reference signal, the bandwidth configuration of the measurement reference signal and the subframe configuration of the measurement reference signal, which are included in the measured object, are embodied in the measured object, so as to instruct the measuring base station to perform interference detection to the measurement reference signal on the physical resource blocks.

Configuration of measurement event: the measurement for uplink common pilot symbols by the measuring base station eNB2 can support all the downlink measurement events, such as in the LTE, from A1-A5, B1 and B2, and etc. However, as an uplink measurement event, the event can be renamed: such as C1-C5 and D1 and D2, wherein C1-C5 may correspond to A1-A5, and D1 and D2 may correspond to B1 and B2, the corresponding events have the meanings of the types, but different thresholds may be used since the purposes of measurement are different. In the scenario of interference detection, the main configuration is to detect whether the RSRQ value is higher or lower than the set threshold value. In the scenario that the base station performs detection, the measurement results will be relatively stable, and disturbed by the environment only, since both the LPN and the interfering base station are static base stations. Thus, the detector is low speed, and it may be considered that TTT parameters are not applicable when reporting the measurement results.

Processing of measurement results: eNB2 can perform a L3 filtration to the measurement results reported from the physical layer to the higher-layer, and the parameters for the L3 filtration used by the base station can be configured according to parameters used by a low-speed UE.

Steps 2 and 3 in this solution are the same as steps 2 and 3 in solution one. The measurement of the uplink common reference symbol supports the L3 measurement with specified bandwidth. The specified bandwidth may be similar to the indicating manner in step 3 in solution one, and may also use several fixed granularities of the bandwidth, such as 6RB or 1.25M.

In the interference detection from solution two to solution four, the measuring base station also needs to detect the interfering frequency band of the interfering base station, and the detection method may be one of the following:

Based on the interfered range of the protocol performance specifications and the frequency band used by the interfering base station, the measuring base station determines the interfering frequency band range of the measuring base station, and acquires the reception quality of the interfering base station within the interfering frequency band;

The measuring base station performs a measurement based on a full frequency band of the base station itself, determines the position of the interfering frequency band based on measurement results of different sub-frequency bands of the full frequency band, and acquires the reception quality of the interfering base station within the interfering frequency band;

The measuring base station detects channel quality of the interfering base station over the full frequency band of the base station itself, determines the sub-frequency bands where the channel quality exceeds the threshold as the interfering frequency band, and acquires the reception quality of the interfering base station within the interfering frequency band.

Based on the indication of the above determined interfering frequency band, one of the following methods may be adopted to perform the measurement:

perform the measurement by adopting a method in which the central frequency of the measurement and the measurement bandwidth are set; or

perform the measurement by adopting a method in which the starting position and the ending position of the measurement are indicated respectively; or

perform the measurement by adopting a method in which the starting position and an offset of the measurement are set; or

perform, based on a set granularity, an intra-frequency measurement or an inter-frequency measurement from a high frequency to a low frequency or from a low frequency to a high frequency within the range of the base station of a serving cell.

Embodiments of the present invention further provide another interference detection method, as shown in FIG. 6A, the method includes:

601A: sending, by a measuring base station, a measurement control message for an interfering base station to a UE under the measuring base station; wherein the measurement control message comprises at least one of the following information: a detection range of the measurement reference signal of the interfering base station, a measured quantity to be measured, and a reporting mechanism of the measurement;

Particularly, the detection range of the measurement reference signal of the interfering base station may be the range of the receiving frequency of the measuring base station; the measured quantity may be a signal reception quality; and the reporting mechanism may include: a reporting threshold or a reporting period.

The UE under the measuring base station is particularly one or more UEs to detect that the pathloss of the measuring base station is less than a set threshold or the receiving power is greater than the set threshold.

Particularly, the detection range of the measurement reference signal of the interfering base station may be the range of the receiving frequency of the measuring base station; the measured quantity may be a signal reception quality; and the reporting mechanism may include: a reporting threshold or a reporting period.

602A: receiving, by the measuring base station, the reception quality of the cell signal of the interfering base station reported by the UE.

Further, if the measuring base station receives the reception quality of the cell signals of the interfering base station reported by a plurality of UEs in 702, the measuring base station combines the reception quality of the cell signals of the interfering base station reported by the plurality of UEs.

The interference processing procedure in solution six and solution sever provided by embodiments of the present invention can be further added after this solution, which will not be described in details herein.

The above embodiments are the solutions for interference detection implemented by the measuring base station, correspondingly, the method for achieving the interfering detection on UE, referring to FIG. 6B, includes:

601B: receiving, by a user equipment (UE), a measurement control message sent by a measuring base station;
wherein the measurement control message comprises at least one of the following information: a detection range of a measurement reference signal of an interfering base station, a measured quantity to be measured, and a reporting mechanism of the measurement;

Particularly, the detection range of the measurement reference signal of the interfering base station may be the range of the receiving frequency of the measuring base station; the measured quantity may be a signal reception quality; and the reporting mechanism may include: a reporting threshold or a reporting period.
602B: detecting, by the UE, a reception quality of a cell signal of the interfering base station according to the measurement control message;
603B: reporting, by the UE, the reception quality of the cell signal of the interfering base station to the measuring base station.

Particularly, the detecting the reception quality of the cell signal of the interfering base station includes: the UE acquires an interfered frequency band of the measuring base station; and detects the reception quality of the cell signal of the interfering base station on the interfered frequency band.

More particularly, the acquiring, by the UE, the interfered frequency band of the measuring base station includes:

acquiring, by the user equipment (UE), the interfered frequency band determined by the measuring base station, wherein the interfered frequency band of the measuring base station is determined by the measuring base station based on a frequency band used by the interfering base station and an interfering frequency band range specified by protocol performance specifications; or performing, by the user equipment (UE), a measurement based on a full frequency band of the measuring base station, and determining, by the user equipment (UE), the interfered frequency band of the measuring base station based on the measurement results of different sub-frequency bands of the full frequency band;
or, performing, by the user equipment (UE), a measurement based on a full frequency band of the measuring base station, and reporting measurement results of different sub-frequency bands of the full frequency band to the measuring base station, so that the measuring base station determines the interfered frequency band of the measuring base station;
or, detecting, by the user equipment (UE), a channel quality of the interfering base station over the full frequency band of the measuring base station, and determining a frequency band where the channel quality exceeds the threshold as an interfering frequency band;
or, detecting, by the user equipment (UE), a channel quality of the interfering base station over the full frequency band of the measuring base station, and reporting the channel quality of the interfering base station to the measuring base station, so that the measuring base station determines a frequency band where the channel quality exceeds the threshold as the interfering frequency band.

Further, after detecting the reception quality of the cell signals of the interfering base station, the method further includes:

performing a layer 3 (L3) filtration to the reception quality of the interfering base station, and performing an interference evaluation according to the filtered value.

The information included in the configuration information can refer to the previous four solutions, which will not be described in details herein.

Solution five: the schematic diagram of this solution is shown in FIG. 6C, in this solution, the measuring base station (eNB2) selects a part of UEs served by the measuring base station itself to perform an interference detection of the LPN base station, and obtains the interference information of LPN base station by combining measurement results of N UEs.

The selected MUE (Macro UE) should be a UE capable of receiving on FDD UL. However, since receiving positions of the MUE and the servicing base station (measuring base station) are different, the detection results may be inaccurate. Moreover, if the MUE is used for detection, the MUE should be located very near to the base station. Appropriate MUE should be selected to detect the base station. The selection of the MUE and interference results of the LPN may be as follows:

Method for selecting the MUE: The MUE is selected according to a pathloss (Pathloss, PL) value from the MUE to the servicing base station (measuring base station). The pathloss value from the MUE to the servicing base station (measuring base station) needs to be smaller than a certain threshold, that is, the RSRP of the cell under the servicing base station (measuring base station) received by the UE needs to be greater than a set threshold. The specific selection method is as follows:

1. A PL from a MUE to a servicing base station (measuring base station) = the transmission power (MUE reads SIB2) of the servicing base station (measuring base station) - RSRP (power intensity of a reference symbol of the servicing base station (measuring base station) measured by the MUE);

2. A distance from the MUE to the servicing base station (measuring base station) is evaluated according to the PL from the MUE to the servicing base station (measuring base station). The servicing base station (measuring base station) may set a PL threshold or a RSRP threshold (the measuring base station calculates the PL value by itself after the measurement result is received), and issue the threshold (the PL threshold or the RSRP threshold) to the MUE as a measurement control.

3. The MUE reports the measurement result to the servicing base station (measuring base station) when the MUE determines that the set PL value or RSRP value is satisfied; and the reporting event considers:

PL: PL of the cell under the servicing base station (measuring base station) itself is less than a set threshold;

RSRP: RSRP of the cell under the servicing base station (measuring base station) itself is greater than a set threshold value, this event can re-use the event A1: Serving becomes better than threshold, and the threshold needs to be re-set since the purposes are different.

4. The servicing base station (measuring base station) selects several MUEs with minimum PLs as the UEs for interference evaluation measurement according to the results reported by MUEs.

The measuring base station eNB2 sets the selected UE to perform measurements for the interfering base station:

Because the object of the measurement is interference detection, rather than the selection for target cell handover, it is not needed to adjust the frequency of the UE to the frequency of the target cell, but remain the frequency of the UE within the received frequency band range of the interfered cell so as to detect the signal quality of the adjacent interfering cell within the range. Therefore, the measurement control for the selected UE and the measurement control for the normal UE provided by the measuring base station eNB2 are the same, except that:

Measured object: the measured object may be a frequency point and a bandwidth of the measured cell, an identity (Identity, id) of the measured cell, a downlink and uplink configuration of the measured cell, an offset of the measured cell, a MBSFN configuration or a blank frame configuration of the measured cell and an antenna configuration of the measured cell, and such information may be acquired through an existing interface, such as an X2 interface in a long term evolution (Long Term Evolution, LTE) system, or an Iur interface in a universal mobile telecommunications system (Universal Mobile Telecommunications System, UMTS) or similar interfaces in other systems. But for the measurement of interference-like, the measurement entity needs to remain within the range of a working frequency band of the interfered base station for performing the measurement of the signal of the interfering cell. Therefore, the central frequency point of the measured cell in the measured object may be set to the central frequency point of the interfered cell, or the central frequency point of the measured cell in the measured object is set to a frequency point within the range of the interfering frequency band of the interfered cell. In this case, the central frequency point of the measured cell in the measured object can be autonomously searched according to a certain granularity (for example, in terms of the LTE system, a granularity of 6RB may be adopted).

If only a part of the frequency bands of LPN interfere the measuring base station eNB2, as described above, the measuring base station eNB2 can obtain the following configuration information of the LPN through the existing interfaces: a frequency point and a bandwidth of the cell, an ID of the cell, a downlink and uplink configuration of the cell, an offset of the cell, a MBSFN configuration or a blank frame configuration of the cell, an antenna configuration of the cell and so on. The measuring base station can learn which part of the frequency band of the LPN has interference on the measuring base station itself according to RAN4 performance specifications. Alternatively, the eNB2 performs a measurement of CRS over the full frequency band of the LPN on the base station itself, and then analyzes the measurements results to determine that the CRS of which frequency band has a larger interference value, and determines the corresponding part of frequency band has interference on the eNB2.

The measurement implemented on a part of frequency bands of the interfering base station is the same as the manner 1 of step 3 in solution one.

In order to measure the RSRQ value of the frequency band which causes interference on the measuring base station eNB2 of the LPN accurately, the measurement should be performed to a part of the CRSs, rather than all of the CRSs.

To notify positions of the part of the CRSs, the positions may be expressed in a manner of indicating a central frequency and a bandwidth, or in a manner of indicating a starting frequency and an ending frequency respectively, or in a manner of indicating a starting frequency and an offset.

When the interfered or interfering frequency band is a part of the frequency band, the CRS range to be measured is indicated in this measured object.

```
    Option 1: a central frequency of the CRS +
a measured bandwidth of the CRS method
    MeasObjectEUTRA ::= SEQUENCE {
        carrierFreq ARFCN-ValueEUTRA,
    allowedMeasBandwidth AllowedMeasBandwidth,
     presenceAntennaPort 1 PresenceAntennaPort
1,
        measured_camerFreq ARFCN-ValueEUTRA,
(fc of CC or fc of CRS)
      measured_bandwidth Measured_bandwidth
or measured PRBs
        (bandwidth of partial carrier or CRS)
    or, option 2: a starting position and an
ending position of the measured CRS
    MeasObjectEUTRA ::= SEQUENCE {
        carrierFreq ARFCN-ValueEUTRA,
    allowedMeasBandwidth AllowedMeasBandwidth,
```

```
     presenceAntennaPort 1 PresenceAntennaPort
1,
        measured_carrierFreq_start ARFCN-
ValueEUTRA,
        measured_carrierFreq_stop ARFCN-
ValueEUTRA,
    or, option 3: a starting position of the
measured CRS + an offset
    MeasObjectEUTRA ::= SEQUENCE {
        carrierFreq ARFCN-ValueEUTRA,
    allowedMeasBandwidth AllowedMeasBandwidth,
     presenceAntennaPort 1 PresenceAntennaPort
1,
        measured_carrierFreq_start ARFCN-
ValueEUTRA,
        measured_carrierFreq_offset
Measured_bandwidth or measured PRBs
```

In option 3, if the starting position of the measured CRS is in low frequency, the offset value is positive, and if the measured position of the measured CRS is in high frequency, the offset value is negative.

In addition to the above methods, UE can also perform, based on a set granularity such as a measured bandwidth of 6RB or 1.25MHz, an intra-frequency measurement or an inter-frequency measurement from a high frequency to a low frequency or from a low frequency to a high frequency within the range of the base station of a serving cell.

In this case, in order to reduce the produced inter-frequency measurement, the measurement is maintained as the intra-frequency measurement, since the eNB2 can modify frequency points of the frequency band of the CRS without changing configuration of fc of the measured frequency point even if only a part of CRSs are detected. Or, all the measurements within the received frequency band range of the measuring base station eNB2 are deemed as intra-frequency measurements by the measuring base station eNB2.

Or, the UE keeps the measured fc be the central frequency point of the serving cell, detects the reference signals of adjacent cells within the whole frequency band range of the serving cell, performs a L3 filtration to the measurement result of the part of interfering signals (such as CRS symbol in the interfering frequency band range in FIG. 3B) whose interfering signal quality exceeds the threshold, and performs interference evaluation and interference reporting based on the filtered measurement result. For the part of interfering signals (such as CRS symbol in the non-interfering frequency band range in FIG. 3B) whose interference signal quality is lower than the threshold, the L3 filtration is not performed, and such interfering signals are not evaluated as the interfering signal and not reported as an event. The specific measuring flow is as follows:

1. The measuring base station configures a RSRQ threshold of a LPN needed to be reported by the UE, and issues the threshold to the MUE in the measurement control message;

2. The MUE reports the measurement result of the LPN to the interfered measuring base station when the MUE finds that the set RSRP threshold of the LPN is satisfied;

3. The measuring base station evaluates the position of the MUE according to the PL value of the interfered base station reported by the MUE and the measured value (RSRQ value) of the LPN to be measured;

4. The interfered base station selects measurement results of the LPN reported by the MUEs on different positions and take the average, and obtains the interference results of the LPN received by the interfered base station.

Further, embodiments of the present invention also provide an interference processing method, where when the reception quality value of the measurement reference signal detected by the measuring base station is higher than a set threshold, the measuring base station enables the interference processing procedure with the interfering base station. The interference processing procedure includes: sending, by the measuring base station, an interference processing request to the interfering base station according to the measurement results; or, canceling, by the measuring base station, a data resource scheduling on the interfered subframe; or, performing, by the measuring base station, a data resource scheduling only on a user equipment (UE) with an interference measured on the interfered subframe which is lower than the set threshold.

Solution six: the problem of interference between the measuring base station and LPN is solved by an interference negotiation, and the procedure is as shown in FIG. 7, 701: interference is detected (Interference is detected); 702: interference process request (Interference process request); 703: interference process response (Interference process response); more particularly:

When the measuring base station finds that the LPN base station generates interference on the measuring base station itself, and learns the interfering time domain and frequency domain ranges of the LPN, the base station solves the problem of interference by performing an interference negotiation with the LPN, and the specific procedure is:

1. The measuring base station (eNB2) may send an interference processing request to the LPN after the interference is detected, where the interference processing request includes:

1A: information of a transmission power to be reduced, which can be an absolute transmission power value, or a relative transmission power value, such as how much dB the power is raised or reduced, or just an indication for raising or reducing.

1A-1: in the case that the transmission power is an absolute threshold, the indication for specific transmission power may be included, for example, the transmission power range is a specifc dBM;

1A-2: in the case that the transmission power is a relative transmission power threshold, an indication indicating a specific transmission power adjustment, such as -dB or +dB. In the case that both raising power and reducing power are supported, a negative dB can indicate a reduced power while a positive dB can indicate a raised power. Or in the case of interference, adjacent base stations only indicate reduced power values. The adjacent base stations can determine how much dB is reduced based on the previous interference detection.

1B: time domain position indication or frequency domain position indication of resources to be power controlled:

1B-1: for the case with the same RAT, the frequency domain position of the resources to be adjusted may be: a frequency, a bandwidth, a subcarrier, a channel, an PRB and etc., and the time domain position may be a time slot, a subframe, a radio frame, a superframe, an PRB or other defined recognizable resource combinations, and etc.

1B-2: for the case with different RATs, the frequency domain position of the resources may be: a frequency range (a starting frequency and an ending frequency, or a central frequency + a bandwidth, a channel and etc.), and the time domain position may be a starting of a time stamp, a subframe, a radio frame, a superframe, or time slot and etc.

1C: or indication information of other parameters to be adjusted:

1C-1: a working central frequency and/or a frequency band of the LPN: if the working central frequency and/or the frequency band of the LPN can be adjusted, and the adjusted LPN has no interference on the measuring base station, then changing adjustment on the central frequency and/or the frequency band of the LPN can be considered;

1C-2: changing information about the downlink subframe offset of the LPN: if the specific downlink subframe of the LPN has great interference on the measuring base station, the LPN can make adjustment by adjusting a synchronization offset, such as the offset position of the first downlink frame in the radio frame.

1C-3: changing information about the downlink and uplink configuration of the LPN: if the specific downlink subframe of the LPN has great interference on the measuring base station, the LPN can adjust the configuration of the downlink and uplink ratios, so as to reduce the interference of the specific downlink subframe on the measuring base station.

1C-4: adjustment of the tilt angle of the antenna: the horizontal or vertical tilt angle of the antenna is included. The LPN can modify the coverage area range of the LPN itself through changing the horizontal or vertical tilt angle, which can also reduce the interference on the measuring base station.

2: The LPN receives the interference processing request sent by the eNB2, makes adjustment according to the instructed adjusting information, and feeds back the corresponding interference processing information, where the LPN can configure the updated information or other information through the eNB for carrying the corresponding interference processing information, and the corresponding information includes:

the adjusted power information of the LPN;
the adjusted other parameters information.

Further, embodiments of the present invention also provide solution seven, and the interference processing procedure includes:

canceling data resource scheduling on the interfered subframe; or only performing data resource scheduling on a UE with the interference on the interfered subframe which is lower than the set threshold.

Solution seven: the base station performs internal resource scheduling and adjustment. When interference caused by the interfering base station is detected, the base station can adopt the following two manners of scheduling for the downlink subframe with severe interference:

the first manner is that: on the subframe with severe interference, no data resource scheduling of any UE is performed, but scheduling of the common control resources can be performed.

the second manner: on the subframe with severe interference, the data resource scheduling of only a part of UEs is performed, where the part of UEs are UEs lying in the center of the measuring base station, and free of interference caused by the LPN or with slight interference caused by the LPN.

Embodiments of the present invention provide a method and a system where the base station can directly perform interference detection or select a UE to perform interference detection, and also provide a solution for interference coordination between the base stations after the interference is detected. The present invention has the following advantageous effects: the intra-frequency, inter-frequency or inter-system interference detection and interference processing for uplink reception of the measuring base stations in the presence of the downlink transmission of an interfering base station in a complicated network condition are solved, where the measuring base station is in an adjacent frequency band of the interfering base station and the measuring base station and the interfering base station are in the same system or different systems, thereby ensuring flexible deployment and interference coexistence of networks.

It should be appreciated by persons skilled in the art that, all or a part of the steps in the method of the above embodiments may be completed by relevant hardware under the instruction of a program, and the program may be stored in a computer readable storage medium, when the program is executed, the steps in the method of the above embodiments are performed; the storage medium comprises various media capable of storing program codes, such as a read only memory (ROM)/random access memory (RAM), a floppy disk, or an optical disk and the like.

Embodiments of the present invention further provide a base station, and the base station according to this embodiment can implement, as a measuring base station, the interference detection procedure in solutions one to four, and the interference processing procedure in solution six or seven in the above method embodiments; as shown in FIG. 8, the base station includes:

an acquiring unit 801, configured to acquire a measurement reference signal of an interfering base station and configuration information of the measurement reference signal; and
a detecting unit 802, configured to detect, according to the configuration information acquired by the acquiring unit 801, a reception quality value of the measurement reference signal of the interfering base station.

Further, as shown in FIG. 9, the base station further includes:

an interference processing unit 901, configured to enable an interference processing procedure with the interfering base station when the reception quality value of the measurement reference signal detected by the detecting unit 802 is higher than a set threshold, wherein the interference processing procedure includes:

sending, by the interference processing unit 901, an interference processing request to the interfering base station according to the measurement results; or canceling, by the processing unit 901, data resource scheduling on the interfered subframe; or performing, by the interference processing unit 901, data resource scheduling only on a user equipment (UE) with the interference on the interfered subframe which is lower than the set threshold.

Particularly, the interference processing request sent by the interference processing unit 901 includes at least one of the following information:

transmission power information to be adjusted, time domain position indication information or the frequency domain position indication information of resources to be power controlled, and parameter indication information to be adjusted;
wherein the parameter indication information to be adjusted comprises at least one of the following information: a working central frequency of the cell under the interfering base station, a working frequency band of the cell under the interfering base station, changing information of downlink subframe offset of the cell under the interfering base station, changing information of uplink and downlink configuration of the cell under the interfering base station, and changing information of a tilt angle of an antenna of the cell under the interfering base station.

Optionally, the detecting unit 802 is particularly configured to: determine an interfered frequency band; detect the reception quality value of the measurement reference signal of the interfering base station on the interfered frequency band.

Optionally, the detecting unit 802 is further configured to: perform a layer 3 (L3) filtration to the reception quality value of the measurement reference signal of the interfering base station, and perform an interference evaluation according to the filtered value.

Optionally, as shown in FIG. 10, when the measurement reference signal of the interfering base station is a schedule-based reference signal, the information acquiring unit 801 includes:

a first sending unit 8011, configured to send a measurement request message to the interfering base station, before the detecting unit 802 detects the reception quality value of the measurement reference signal of the interfering base station; and
a first receiving unit 8012, configured to receive the measurement reference signal and configuration information of the measurement reference signal sent by the interfering base station according to the measurement request message sent by the first sending unit 8011.

Embodiments of the present invention further provide a base station, which can implement, as an interfering base station, the method procedure of the interfering base station in any one of the above embodiments one to four, as shown in FIG. 11, the base station includes:

a second sending unit 1101, configured to send a measurement reference signal to a measuring base station, wherein a sending power of the measurement reference signal of the base station is same as a transmission power of a common reference symbol on a downlink subframe of the base station; and send configuration information of the measurement reference signal to the measuring base station, so that the measuring base station detects a reception quality value of the measurement reference signal of the interfering base station according to the configuration information.

Further, as shown in FIG. 12, the base station may also include:

a second receiving unit 1201, configured to receive a measurement request message sent by the measuring base station before the configuration information of the measurement reference signal is sent to the measuring base station,;
the second sending unit 1101 is particularly configured to, send the measurement reference signal to the measuring base station according to the measurement request message received by the second receiving unit 1201,; and send the configuration information of the measurement reference signal to the measuring base station according to the measurement request message received by the second receiving unit 1201.

Embodiments of the present invention further provide a base station, which can implement, as a measuring base station, the interference detection procedure of the measuring base station in solution five, and the interference processing procedure in solution six or solution seven in the above method embodiments; as shown in FIG. 13, the base station includes:

> a third sending unit 1301, configured to send a measurement control message for an interfering base station to a UE under the base station;
> where the measurement control message includes at least one of the following information: a detection range of the measurement reference signal of the interfering base station, a measured quantity to be measured, and a reporting mechanism of the measurement;

Particularly, the detection range of the measurement reference signal of the interfering base station may be the range of the receiving frequency of the measuring base station; the measured quantity may be a signal reception quality; and the reporting mechanism may include: a reporting threshold or a reporting period.
a third receiving unit 1302, configured to receive a reception quality of a cell signal of the interfering base station reported by the UE to which the measurement control message is sent by the third sending unit.

Further, as shown in FIG. 14, the base station may also include:

> a processing unit 1401, configured to enable an interference processing procedure with the interfering base station when the reception quality value received by the third receiving unit 1302 is higher than a set threshold, wherein the interference processing procedure includes:

> > sending, by the processing unit 1401, an interference processing request to the interfering base station according to the measurement results; or canceling, by the processing unit 1401, data resource scheduling on the interfered subframe; or performing, by the processing unit 1401, data resource scheduling only on a user equipment (UE) with the interference measured on the interfered subframe which is lower than the set threshold.

Further, as shown in FIG. 15, the base station may also includes:

> a combining unit 1501, configured to combine reception quality of the cell signals of the interfering base station reported by a plurality of UEs, when the third receiving unit 1302 receives the reception quality of the cell signals of the interfering base station reported by a plurality of UEs.

Embodiments of the present invention further provide a user equipment, which can implement the interference detection procedure of the user equipment in solution five in the method embodiments; as shown in FIG. 16, the user equipment includes:

> a fourth receiving unit 1601, configured to receive a measurement control message sent by a measuring base station;
> wherein the measurement control message includes at least one of the following information: a detection range of the measurement reference signal of an interfering base station, a measured quantity to be measured, and a reporting mechanism of a measurement;

Particularly, the detection range of the measurement reference signal of the interfering base station may be the range of the receiving frequency of the measuring base station; the measured quantity may be a signal reception quality; and the reporting mechanism may include: a reporting threshold or a reporting period.
a measuring unit 1602, configured to detect, according to the measurement control message received by the fourth receiving unit 1601, the reception quality of the cell signals of the interfering base station;
a fourth sending unit 1603, configured to report the reception quality of the cell signals of the interfering base station measured by the measuring unit 1602 to the measuring base station.

Particularly, the measuring unit 1602 is particularly configured to: acquire the interfered frequency band of the measuring base station; and detect the reception quality of the cell signal of the interfering base station on the interfered frequency band.

Further, as shown in FIG. 17, the user equipment may also includes:

> a filtering unit 1701, configured to perform a layer 3 (L3) filtration to the reception quality obtained by the measuring unit 1602 by measuring, and perform an interference evaluation according to the filtered value.

Embodiments of the present invention further provide an interference detection system,
as shown in FIG. 18, the interference detection system includes: a base station 1801 for generating interference, and a base station 1802 capable of performing interference measurement shown in any one of FIGS. 8-10; or a base station 1801 shown in FIG. 11 or FIG. 12 and a base station 1802 shown in any one of FIGS. 8-10; or as shown in FIG. 19, the interference detection system includes: a base station 1901 shown in any one of FIGS. 13-15 and a user equipment 1902 shown in FIG. 16 or FIG. 17. It should be appreciated that, there are generally at least two or more base stations according to embodiments of the present invention.

Embodiments of the present invention provide a method and a system where the base station can directly perform interference detection or select a UE to perform interference detection, and also provide a solution for interference coordination between the base stations after the interference is detected. The present invention has the following advantageous effects: the intra-frequency, inter-frequency or inter-system interference detection and interference processing for uplink reception of the measuring base stations in the presence of the downlink transmission of an interfering base station in a complicated network condition are solved, where the measuring base station is in an adjacent frequency band of the interfering base station and the measuring base station and the interfering base station are in the same system or different systems, thereby ensuring flexible deployment and coexistence of networks.

The interference detection method, device, and system according to embodiments of the present invention have been introduced in details above, and specific cases are used to explain the principle and implementation manners herein, and the above description of embodiments is merely intended to facilitate understanding of the methods of the invention and its core concept; meanwhile, it is apparent to persons skilled in the art that changes can be made to the specific implementation and application scope of the present invention based on the concept of the invention, in view of the above, the contents of the specification shall not be considered as a limitation to the present invention.

**Claims**

1. An interference detection method, comprising:

   acquiring (201 A), by a measuring base station, a measurement reference signal of an interfering base station and configuration information of the measurement reference signal; and
   detecting (202A), by the measuring base station, a reception quality value of the measurement reference signal of the interfering base station according to the configuration information; wherein the detecting (202A), by the measuring base station, the reception quality value of the measurement reference signal of the interfering base station according to the configuration information, comprises:

   determining, by the measuring base station, an interfered frequency band of the measuring base station;
   detecting, by the measuring base station, the reception quality value of the measurement reference signal of the interfering base station on the interfered frequency band of the measuring base station.

2. The method according to claim 1, wherein the measurement reference signal comprises one of the following: a common reference symbol on a downlink subframe, a sounding reference signal on a downlink subframe, a common reference symbol on an uplink subframe, and a sounding reference signal on an uplink subframe.

3. The method according to claim 1 or 2, further comprising:

   when the reception quality value of the measurement reference signal is higher than a set threshold, enabling, by the measuring base station, an interference processing procedure with the interfering base station, wherein the interference processing procedure comprises:

   sending, by the measuring base station, an interference processing request to the interfering base station according to the reception quality value of the reference signal; or canceling, by the measuring base station, a data resource scheduling on an interfered subframe; or performing, by the measuring base station, a data resource scheduling only on a user equipment, UE, with a reception quality value of the reference signal measured on an interfered subframe which is lower than the set threshold.

4. The method according to claim 3, wherein the interference processing request comprises at least one of the following information:

   transmission power information to be adjusted, time domain position indication information or frequency domain position indication information of a resource to be power controlled, and parameter indication information to be adjusted; wherein the parameter indication information to be adjusted comprises at least one of the following information: a working central frequency of a cell under the interfering base station, a working frequency band of the cell under the interfering base station, changing information of downlink subframe offset of the cell under the interfering base station, changing information of uplink and downlink configuration of the cell under the interfering base station, and changing information of a tilt angle of an antenna of the cell under the interfering base station.

5. The method according to claim 1 or 2, before the measuring base station performs the detection, further comprising:

   acquiring, by the measuring base station, scheduling performance of cells under the measuring base station itself, and performing the detection if the scheduling performance of the cells is degraded; or

detecting, by the measuring base station, a reception quality value of a reference signal of the measuring base station itself, and performing the detection if the reception quality value of the reference signal of the measuring base station is lower than the set threshold.

6. The method according to claim 1, wherein the determining, by the measuring base station, the interfered frequency band of the measuring base station, comprises:

    determining, by the measuring base station, an interfered frequency band of the measuring base station based on a frequency band used by the interfering base station and an interfered frequency band range specified by a protocol performance specification; or
    performing, by the measuring base station, a measurement based on a full frequency band of the measuring base station itself, and determining the interfered frequency band of the measuring base station based on measurement results of different sub-frequency bands of the full frequency band; or
    detecting, by the measuring base station, a channel quality of the interfering base station over the full frequency band of the measuring base station itself, and determining a frequency band wherein the channel quality exceeds the threshold as the interfering frequency band.

7. The method according to claim 1 or 2, after the detecting, by the measuring base station, the reception quality value of the measurement reference signal of the interfering base station, further comprising:

    performing a layer 3, L3, filtration to the reception quality value of the measurement reference signal of the interfering base station, and performing an interference evaluation according to the filtered value.

8. The method according to claim 1 or 2, when the measurement reference signal of the interfering base station is a schedule-based reference signal, before the detecting, by the measuring base station, the reception quality value of the measurement reference signal of the interfering base station, further comprising:

    sending, by the measuring base station, a measurement request message to the interfering base station;
    receiving, by the measuring base station, the schedule-based reference signal and configuration information of the schedule-based reference signal sent by the interfering base station according to the measurement request message.

9. The method according to claim 1 or 2, wherein the configuration information comprises at least one of the following information: position indication information of the measurement reference signal, bandwidth configuration of the measurement reference signal, subframe configuration of the measurement reference signal, reporting configuration of the measurement reference signal, and transmission power configuration of the measurement reference signal; wherein the position indication information is:

    information indicating a central frequency and a measured bandwidth used for measuring the measurement reference signal; or
    information indicating a starting position and an ending position used for measuring the measurement reference signal; or
    information indicating a starting position and an offset used for measuring the measurement reference signal.

10. An interference detection method, comprising:

    receiving (601B), by a user equipment, UE, a measurement control message sent by a measuring base station;
    wherein the measurement control message comprises at least one of the following information: a detection range of the measurement reference signal of an interfering base station, a measured quantity to be measured, and a reporting mechanism of a measurement;
    detecting (602B), by the UE, a reception quality of a cell signal of the interfering base station according to the measurement control message;
    reporting (603B), by the UE, the reception quality of the cell signal of the interfering base station to the measuring base station;
    wherein the detecting the reception quality of the cell signal of the interfering base station comprises:

        acquiring, by the UE, an interfered frequency band of the measuring base station;
        detecting, by the UE, the reception quality of the cell signal of the interfering base station on the interfered frequency band of the measuring base station.

11. The method according to claim 10, wherein the acquiring, by the UE, the interfered frequency band of the measuring base station comprises:

        acquiring, by the UE, the interfered frequency band of the measuring base station determined by the measuring base station, wherein the interfered frequency band of the measuring base station is determined by the measuring base station based on a frequency band used by the interfering base station and an interfering frequency band range specified by a protocol performance specification; or

performing, by the UE, a measurement based on a full frequency band of the measuring base station, and determining the interfered frequency band of the measuring base station based on measurement results of different sub-frequency bands of the full frequency band; or

performing, by the UE, a measurement based on a full frequency band of the measuring base station, and reporting measurement results of different sub-frequency bands of the full frequency band to the measuring base station, so that the measuring base station determines the interfered frequency band of the measuring base station;

detecting, by the UE, a channel quality of the interfering base station over the full frequency band of the measuring base station, and determining a frequency band wherein the channel quality exceeds a threshold as an interfering frequency band; or

detecting, by the UE, a channel quality of the interfering base station over the full frequency band of the measuring base station, and reporting the channel quality of the interfering base station to the measuring base station, so that the measuring base station determines a frequency band wherein the channel quality exceeds a threshold as interfering frequency band.

12. The method according to claim 10, after the detecting the reception quality of the cell signal of the interfering base station, further comprising:

performing a layer 3, L3, filtration to the reception quality of the interfering base station, and performing an interference evaluation according to the filtered value.

**Patentansprüche**

1. Störungsdetektionsverfahren, das Folgendes umfasst:

Erfassen (201A) durch eine messende Basisstation eines Messungsreferenzsignals einer störenden Basisstation und Konfigurationsinformationen des Messungsreferenzsignals; und Detektieren (202A) durch die messende Basisstation eines Empfangsqualitätswerts des Messungsreferenzsignals der störenden Basisstation gemäß den Konfigurationsinformationen; wobei das Detektieren (202A) durch die messende Basisstation des Empfangsqualitätswerts des Messungsreferenzsignals der störenden Basisstation gemäß den Konfigurationsinformationen Folgendes umfasst:

Bestimmen durch die messende Basisstation eines gestörten Frequenzbands der messenden Basisstation; Detektieren durch die messende Basisstation des Empfangsqualitätswerts des Messungsreferenzsignals der störenden Basisstation auf dem gestörten Frequenzband der messenden Basisstation.

2. Verfahren nach Anspruch 1, wobei das Messungsreferenzsignal eines aus dem Folgenden umfasst: ein allgemeines Referenzsymbol auf einem Abwärtsstreckenunterrahmen, ein Tonreferenzsignal auf einem Abwärtsstreckenunterrahmen, ein allgemeines Referenzsymbol auf einem Aufwärtsstreckenunterrahmen und ein Tonreferenzsignal auf einem Aufwärtsstreckenunterrahmen.

3. Verfahren nach Anspruch 1 oder 2, das ferner Folgendes umfasst:

wenn der Empfangsqualitätswert des Messungsreferenzsignals höher ist als ein eingestellter Schwellenwert, Aktivieren durch die messende Basisstation einer Störungsverarbeitungsprozedur mit der störenden Basisstation, wobei die Störungsverarbeitungsprozedur Folgendes umfasst:

Senden durch die messende Basisstation einer Störungsverarbeitungsanforderung zu der störenden Basisstation gemäß dem Empfangsqualitätswert des Referenzsignals; oder Abbrechen durch die messende Basisstation von Datenbetriebsmittelplanung auf einem gestörten Unterrahmen; oder Ausführen durch die messende Basisstation einer Datenbetriebsmittelplanung nur auf einem Anwendergerät, UE, mit einem Empfangsqualitätswert des Referenzsignals, das auf einem gestörten Unterrahmen gemessen ist, der niedriger ist als der eingestellte Schwellenwert.

4. Verfahren nach Anspruch 3, wobei die Störungsverarbeitungsanforderung wenigstens eine der folgenden Informationen umfasst:

Sendeleistungsinformationen, die angepasst werden sollen, Zeitbereichspositionsangabeinformationen oder Frequenzbereichspositionsangabeinformationen eines Betriebsmittels, dessen Leistung gesteuert werden sollen, und Parameterangabeinformationen, die angepasst werden sollen;

wobei die Parameterangabeinformationen, die angepasst werden sollen, wenigstens eine aus den folgenden Informationen umfassen: eine Arbeitsmittelfrequenz einer Zelle unter der störenden Basisstation, ein Arbeitsfrequenzband der Zelle unter der störenden Basisstation, Änderungsinformationen des Abwärtsstreckenunterrahmenversatzes der Zelle unter der störenden Basisstation, Änderungsinformationen der Aufwärtsstrecken- und Abwärtsstreckenkonfiguration der Zelle unter der störenden Basisstation und Änderungsinformationen eines Neigungswinkels einer Antenne der Zelle unter der störenden Basisstation.

5. Verfahren nach Anspruch 1 oder 2, das, bevor die messende Basisstation die Detektion ausführt, ferner Folgendes umfasst:

Erfassen durch die messende Basisstation von Planungsleistung der Zellen unter der messenden Basisstation selbst, und Ausführen der Detektion, falls die Planungsleistung der Zelle herabgesetzt ist; oder

Detektieren durch die messende Basisstation eines Empfangsqualitätswerts eines Referenzsignals der messenden Basisstation selbst und Ausführen der Detektion, falls der Empfangsqualitätswert des Referenzsignals der messenden Basisstation niedriger ist als der eingestellte Schwellenwert.

6. Verfahren nach Anspruch 1, wobei das Bestimmen durch die messende Basisstation des gestörten Frequenzbands der messenden Basisstation Folgendes umfasst:

Bestimmen durch die messende Basisstation eines gestörten Frequenzbands der messenden Basisstation basierend auf einem Frequenzband, das durch die störende Basisstation verwendet wird, und eines gestörten Frequenzbandbereichs, der durch eine Protokollleistungsspezifikation spezifiziert ist; oder

Ausführen durch die messende Basisstation einer Messung basierend auf einem vollständigen Frequenzband der messenden Basisstation selbst und Bestimmen des gestörten Frequenzbands der messenden Basisstation basierend auf Messergebnissen unterschiedlicher Teilfrequenzbänder des vollständigen Frequenzbands; oder

Detektieren durch die messende Basisstation einer Kanalqualität der störenden Basisstation über das vollständige Frequenzband der messenden Basisstation selbst und Bestimmen eines Frequenzbands, in dem die Kanalqualität den Schwellenwert übersteigt, als das störende Frequenzband.

7. Verfahren nach Anspruch 1 oder 2, das nach dem Detektieren durch die messende Basisstation des Empfangsqualitätswerts des Messungsreferenzsignals der störenden Basisstation ferner Folgendes umfasst:

Ausführen von Schicht-3-Filtern, L3-Filtern, auf dem Empfangsqualitätswert des Messungsreferenzsignals der störenden Basisstation und Ausführen einer Störungsauswertung gemäß dem gefilterten Wert.

8. Verfahren nach Anspruch 1 oder 2, das, wenn das Messungsreferenzsignal der störenden Basisstation ein planungsbasiertes Referenzsignal ist, vor dem Detektieren durch die messende Basisstation des Empfangsqualitätswerts des Messungsreferenzsignals der störenden Basisstation ferner Folgendes umfasst:

Senden durch die messende Basisstation einer Messungsanforderungsnachricht zu der störenden Basisstation;

Empfangen durch die messende Basisstation des planungsbasierten Referenzsignals und von Konfigurationsinformationen des planungsbasierten Referenzsignals, die durch die störende Basisstation gemäß der Messungsanforderungsnachricht gesendet werden.

9. Verfahren nach Anspruch 1 oder 2, wobei die Konfigurationsinformationen wenigstens eine aus den folgenden Informationen umfassen:

Positionsangabeinformationen des Messungsreferenzsignals, Bandbreitenkonfiguration des Messungsreferenzsignals, Unterrahmenkonfiguration des Messungsreferenzsignals, Berichtskonfiguration des Messungsreferenzsignals und Sendeleistungskonfiguration des Messungsreferenzsignals;

wobei die Positionsangabeinformationen Folgendes sind:

Informationen, die eine Mittelfrequenz und eine gemessene Bandbreite, die zum Messen des Messungsreferenzsignals verwendet werden, angeben; oder

Informationen, die eine Anfangsposition und eine Endposition, die zum Messen des Messungsreferenzsignals verwendet werden, angeben; oder

Informationen, die eine Anfangsposition und einen Versatz, die zum Messen des Messungsreferenzsignals verwendet werden, angeben.

10. Störungsdetektionsverfahren, das Folgendes umfasst:

Empfangen (601 B) durch ein Anwendergerät, UE, einer Messungssteuerungsnachricht, die durch eine messende Basisstation gesendet wird;

wobei die Messungssteuerungsnachricht wenigstens eine aus den folgenden Informationen umfasst: einen Detektionsbereich des Messungsreferenzsignals einer störenden Basisstation, eine Messgröße, die gemessen werden soll, und einen Berichtsmechanismus der Messung;

Detektieren (602B) durch das UE einer Empfangsqualität eines Zellensignals der störenden Basisstation gemäß der Messungssteuerungsnachricht;

Berichten (603B) durch das UE der Empfangsqualität des Zellensignals der störenden Basisstation an die messende Basisstation;

wobei das Detektieren der Empfangsqualität des Zellensignals der störenden Basisstation Folgendes umfasst:

Erfassen durch das UE eines gestörten Frequenzbands der messenden Basisstation;

Detektieren durch das UE der Empfangsqualität des Zellensignals der störenden Basisstation auf dem gestörten Frequenzband der messenden Basisstation.

11. Verfahren nach Anspruch 10, wobei das Erfassen durch das UE des gestörten Frequenzbands der messenden Basisstation Folgendes umfasst:

Erfassen durch das UE des gestörten Frequenzbands der messenden Basisstation, dass durch die messende Basisstation bestimmt ist, wobei das gestörte Frequenzband der messenden Basisstation durch die messende Basisstation basierend auf einem Frequenzband, das durch die störende Basisstation verwendet wird, und einem störenden Frequenzbandbereich, der durch eine Protokollleistungsspezifikation spezifiziert ist, bestimmt wird; oder

Ausführen durch das UE einer Messung basierend auf einem vollständigen Frequenzband der messenden Basisstation und Bestimmen des gestörten Frequenzbands der messenden Basisstation basierend auf Messergebnissen unterschiedlicher Teilfrequenzbänder des vollständigen Frequenzbands; oder

Ausführen durch das UE einer Messung basierend auf einem vollständigen Frequenzband der messenden Basisstation und Berichten von Messergebnissen unterschiedlicher Unterfrequenzbänder des vollständigen Frequenzbands an die messende Basisstation, so dass die messende Basisstation das gestörte Frequenzband der messenden Basisstation bestimmt;

Detektieren durch das UE einer Kanalqualität der störenden Basisstation über das vollständige Frequenzband der messenden Basisstation und Bestimmen eines Frequenzbands, in dem die Kanalqualität einen Schwellenwert übersteigt, als ein störendes Frequenzband; oder

Detektieren durch das UE einer Kanalqualität einer störenden Basisstation über das vollständige Frequenzband der messenden Basisstation und Berichten der Kanalqualität der störenden Basisstation an die messende Basisstation, so dass die messende Basisstation ein Frequenzband, in dem die Kanalqualität einen Schwellenwert übersteigt, als störendes Frequenzband bestimmt.

12. Verfahren nach Anspruch 10, das nach dem Detektieren der Empfangsqualität eines Zellensignals der störenden Basisstation ferner Folgendes umfasst:

Ausführen von Schicht-3-Filtern, L3-Filtern, auf der Empfangsqualität der störenden Basisstation und Ausführen einer Störungsauswertung gemäß dem gefilterten Wert.

**Revendications**

1. Procédé de détection d'interférence, comprenant les étapes suivantes :

acquérir (201 A), par une station de base de mesure, un signal de référence de mesure d'une station de base perturbatrice et des informations de configuration du signal de référence de mesure ; et

détecter (202A), par la station de base de mesure, une valeur de la qualité de réception du signal de référence de mesure de la station de base perturbatrice en fonction des informations de configuration ;

où la détection (202A), par la station de base de mesure, de la valeur de la qualité de réception du signal de référence de mesure de la station de base perturbatrice en fonction des informations de configuration comprend les étapes suivantes :

déterminer, par la station de base de mesure, une bande de fréquences perturbée de la station de base de mesure ;

détecter, par la station de base de mesure, la valeur de la qualité de réception du signal de référence de mesure de la station de base perturbatrice sur la bande de fréquences perturbée de la station de base de mesure.

2. Procédé selon la revendication 1, dans lequel le signal de référence de mesure comprend un des éléments suivants : un symbole de référence commun sur une sous-trame de liaison descendante, un signal de référence de sondage sur une sous-trame de liaison descendante, un symbole de référence commun sur une sous-trame de liaison montante, et un signal de référence de sondage sur une sous-trame de liaison montante.

3. Procédé selon la revendication 1 ou la revendication 2, comprenant en outre l'étape suivante :

lorsque la valeur de la qualité de réception du signal de référence de mesure est supérieure à un seuil fixé, permettre, par la station de base de mesure, une procédure de traitement d'interférence avec la station de base perturbatrice, où la procédure de traitement d'interférence comprend l'étape suivante :

envoyer, par la station de base de mesure, une demande de traitement d'interférence à la station de base perturbatrice en fonction de la valeur de la qualité de réception du signal de référence ; ou

annuler, par la station de base de mesure, une planification de ressources de données sur une sous-trame perturbée ; ou

exécuter, par la station de base de mesure, une planification de ressources de données uniquement sur un équipement d'utilisateur (UE), avec une valeur de la qualité de réception du signal de référence mesurée sur une sous-trame perturbée qui est inférieure au seuil fixé.

4. Procédé selon la revendication 3, dans lequel la demande de traitement d'interférence comprend au moins une des informations suivantes :

des informations de puissance de transmission à régler, des informations d'indication de position de domaine temporel ou des informations d'indication de position de domaine fréquentiel d'une ressource dont la puissance doit être contrôlée, et des informations d'indication de paramètre à régler ;

où les informations d'indication de paramètre à régler comprennent au moins une des informations suivantes : une fréquence centrale de travail d'une cellule couverte par la station de base perturbatrice, une bande de fréquences de travail de la cellule couverte par la station de base perturbatrice, des informations de changement de décalage de sous-trame de liaison descendante de la cellule couverte par la station de base perturbatrice, des informations de changement de configuration de liaison montante et de liaison descendante de la cellule couverte par la station de base perturbatrice, et des informations de changement d'un angle d'inclinaison d'une antenne de la cellule couverte par la station de base perturbatrice.

5. Procédé selon la revendication 1 ou la revendication 2, comprenant en outre, avant que la station de base de mesure n'effectue la détection, les étapes suivantes :

acquérir, par la station de base de mesure, des performances de planification de cellules couvertes par la station de base de mesure elle-même, et effectuer la détection si les performances de planification des cellules se sont dégradées ; ou

détecter, par la station de base de mesure, une valeur de la qualité de réception d'un signal de référence de la station de base de mesure elle-même, et effectuer la détection si la valeur de la qualité de réception du signal de référence de la station de base de mesure est inférieure au seuil fixé.

6. Procédé selon la revendication 1, dans lequel la détermination, par la station de base de mesure, de la bande de fréquences perturbée de la station de base de mesure, comprend les étapes suivantes :

déterminer, par la station de base de mesure, une bande de fréquences perturbée de la station de base de mesure sur la base d'une bande de fréquences utilisée par la station de base perturbatrice et une plage de bande de fréquences perturbée spécifiée par une spécification de performance de protocole ; ou

effectuer, par la station de base de mesure, une mesure sur la base d'une bande de fréquences complète de la station de base de mesure elle-même, et déterminer la bande de fréquences perturbée de la station de base de mesure sur la base de résultats de mesure de différentes sous-bandes de fréquences de la bande de fréquences complète ; ou

détecter, par la station de base de mesure, une qualité de canal de la station de base perturbatrice sur la bande de fréquences complète de la station de base de mesure elle-même, et déterminer, comme bande de fréquences perturbatrice, une bande de fréquences où la qualité de canal dépasse le seuil.

7. Procédé selon la revendication 1 ou la revendication 2, comprenant en outre, après la détection, par la station de base de mesure, de la valeur de la qualité de réception du signal de référence de mesure de la station de base perturbatrice, les étapes suivantes :

exécuter un filtrage de couche 3, L3, à la valeur de la qualité de réception du signal de référence de mesure de la station de base perturbatrice, et effectuer une évaluation de l'interférence en fonction de la valeur filtrée.

8. Procédé selon la revendication 1 ou la revendication 2, comprenant en outre, lorsque le signal de référence de mesure de la station de base perturbatrice est un signal de référence basé sur une planification, avant la détection, par la station de base de mesure, de la valeur de la qualité de réception du signal de référence de mesure de la station de base perturbatrice, les étapes suivantes :

envoyer, par la station de base de mesure, un message de demande de mesure à la station de base perturbatrice ;
recevoir, par la station de base de mesure, le signal de référence basé sur une planification et des informations de configuration du signal de référence basé sur une planification envoyé par la station de base perturbatrice en fonction du message de demande de mesure.

9. Procédé selon la revendication 1 ou la revendication 2, dans lequel les informations de configuration comprennent au moins une des informations suivantes : des informations d'indication de position du signal de référence de mesure, la configuration de la bande passante du signal de référence de mesure, la configuration de sous-trame du signal de référence de mesure, la configuration du rapport du signal de référence de mesure, et la configuration de la puissance de transmission du signal de référence de mesure ;
où les informations d'indication de position sont :

des informations indiquant une fréquence centrale et une bande passante mesurée utilisées pour mesurer le signal de référence de mesure ; ou
des informations indiquant une position de départ et une position de fin utilisées pour mesurer le signal de référence de mesure ; ou
des informations indiquant une position de départ et un décalage utilisés pour mesurer le signal de référence de mesure.

10. Procédé de détection d'interférence, comprenant les étapes suivantes :

recevoir (601B), par un équipement d'utilisateur (UE), un message de contrôle de mesure envoyé par une station de base de mesure ;
où le message de contrôle de mesure comprend au moins une des informations suivantes : une plage de détection du signal de référence de mesure d'une station de base perturbatrice, une quantité mesurée à mesurer, et un mécanisme de rapport d'une mesure ;
détecter (602B), par l'UE, une qualité de réception d'un signal de cellule de la station de base perturbatrice en fonction du message de contrôle de mesure ;
rapporter (603B), par l'UE, la qualité de réception du signal de cellule de la station de base perturbatrice à la station de base de mesure ;
où la détection de la qualité de réception du signal de cellule de la station de base perturbatrice comprend les étapes suivantes :

acquérir, par l'UE, une bande de fréquences perturbée de la station de base de mesure ;
détecter, par l'UE, la qualité de réception du signal de cellule de la station de base perturbatrice sur la bande de fréquences perturbée de la station de base de mesure.

11. Procédé selon la revendication 10, dans lequel l'acquisition, par l'UE, de la bande de fréquences perturbée de la station de base de mesure comprend les étapes suivantes :

acquérir, par l'UE, la bande de fréquences perturbée de la station de base de mesure déterminée par la station de base de mesure, où la bande de fréquences perturbée de la station de base de mesure est déterminée par la station de base de mesure sur la base d'une bande de fréquences utilisée par la station de base perturbatrice et d'une plage de bande de fréquences perturbatrice spécifiée par une spécification de performance de protocole ; ou
effectuer, par l'UE, une mesure sur la base d'une bande de fréquences complète de la station de base de mesure, et déterminer la bande de fréquences perturbée de la station de base de mesure sur la base de résultats de mesure de différentes sous-bandes de fréquences de la bande de fréquences complète ; ou
effectuer, par l'UE, une mesure sur la base d'une bande de fréquences complète de la station de base de mesure et rapporter les résultats de mesure de différentes sous-bandes de fréquences de la bande de fréquences complète à la station de base de mesure, de sorte que la station de base de mesure détermine la bande de fréquences perturbée de la station de base de mesure ; détecter, par l'UE, une qualité de canal de la station de base perturbatrice sur la bande de fréquences complète de la station de base de mesure, et déterminer une bande de fréquence où la qualité de canal dépasse un seuil comme bande de fréquences perturbatrice ; ou détecter, par l'UE, une qualité de canal de la station de base perturbatrice sur la bande de fréquences complète de la station de base de mesure, et rapporter la qualité de canal de la station de base perturbatrice à la station de base de mesure, de sorte que la station de base de mesure détermine comme bande de fréquences perturbatrice, une bande de fréquences où la qualité de canal dépasse à un seuil.

12. Procédé selon la revendication 10, comprenant en outre, après la détection de la qualité de réception du signal de cellule de la station de base perturbatrice, les étapes suivantes :

exécuter un filtrage de couche 3, L3, à la qualité de réception de la station de base perturbatrice, et exécuter une évaluation de l'interférence en fonction de la valeur filtrée.

FIG. 1A

FIG. 1B

FIG. 1C

FIG. 1D

FIG. 1E

201A

acquiring, by a measuring base station, a measurement
reference signal of an interfering base station and
configuration information of the measurement reference signal

202A

detecting, by the measuring base station, a reception quality
value of the measurement reference signal of the interfering
base station according to the configuration information

FIG. 2A

201B

sending, by an interfering base station, a
measurement reference signal to a measuring base
station

202B

sending, by the interfering base station, configuration
information of the measurement reference signal to
the measuring base station

FIG. 2B

| LPN | eNB2 |
|---|---|

Scheduling performance is degraded

Measure the RSRQ value

◄──── Start to measure the LPN ────

Save the measurement results

Interference processing

FIG. 3A

Non-interfering frequency band range

uplink of the measuring base station eNB2

Interfering frequency band range

downlink and uplink of the LPN

FIG. 3B

LPN

eNB2

detect scheduling
performance

←scheduling request of the SRS─

SRS
scheduling

scheduling message

Detect threashold

←─Start to measure the LPN──

Save the
measurement results

Interference processing

FIG. 4A

$R_0$ $R_0$

One antenna port

$R_0$ $R_0$

$R_0$ $R_0$

$R_0$ $R_0$

$l = 0$  $l = 6$ $l = 0$  $l = 6$

FIG. 4B-1

Two antenna ports

FIG. 4B-2

Four antenna ports

FIG. 4B-3

SC-FDMA block

subcarrier

$l = 0$     $l = 6$   $l = 0$     $l = 6$

FIG. 4C

SC-FDMA block

subcarrier

$l = 0$     $l = 6$   $l = 0$     $l = 6$

FIG. 5

601A

sending, by a measuring base station, a measurement
control message for an interfering base station to a UE
under the measuring base station

602A

receiving, by the measuring base station, the reception
quality of the cell signal of the interfering base station
reported by the UE

FIG. 6A

601B

receiving, by a user equipment (UE), a measurement
control message sent by a measuring base station

602B

detecting, by the UE, a reception quality of a cell
signal of the interfering base station according to the
measurement control message

603B

reporting, by the UE, the reception quality of the cell
signal of the interfering base station to the measuring
base station

FIG. 6B

FIG. 6C

FIG. 7

FIG. 8

801

802

901

acquiring unit — detecting unit — interference processing unit

FIG. 9

801

acquiring unit

8011

first sending unit

8012

first receiving unit

802

detecting unit

FIG. 10

1101

second sending unit

FIG. 11

1201

1101

second receiving unit — second sending unit

FIG. 12

1301                    1302

| third sending unit | third receiving unit |
|---|---|

FIG. 13

1301                    1302                    1401

| third sending unit | third receiving unit | processing unit |
|---|---|---|

FIG. 14

1301                    1302                    1401

| third sending unit | third receiving unit | processing unit |
|---|---|---|

1501

| combining unit |
|---|

FIG. 15

1601                    1602                    1603

| fourth receiving unit | measuring unit | fourth sending unit |
|---|---|---|

FIG. 16

1601                          1602                                    1603

| fourth receiving unit | measuring unit | | fourth sending unit |

                                         1701

| filtering unit |

FIG. 17

1801                          1802

| base station | base station |

FIG. 18

1901                          1902

| base station | user equipment |

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010086734 A1